# EUROPÄISCHE PATENTSCHRIFT

(11) **EP 3 353 131 B1**
(45) Veröffentlichungstag und Bekanntmachung des Hinweises auf die Patenterteilung: **10.09.2025**
(21) Anmeldenummer: 16775578.4
(22) Anmeldetag: 22.09.2016
(51) Int. Cl.: C04B 24/26, C04B 28/02, C04B 28/04, C04B 28/08

(54) **COPOLYMERE MIT GRADIENTENSTRUKTUR ALS DISPERGIERMITTEL FÜR ALKALISCH AKTIVIERTE BINDEMITTEL**
COPOLYMERS HAVING A GRADIENT STRUCTURE AS DISPERSION AGENT FOR ALKALINE ACTIVATED BINDER
COPOLYMERES AYANT UNE STRUCTURE A GRADIENT D'INDICE COMME AGENT DISPERSANT POUR LIANT ACTIVE DE MANIERE ALCALINE

(30) Priorität: 24.09.2015 EP 15186757
(43) Veröffentlichungstag der Anmeldung: 01.08.2018
(73) Patentinhaber: Sika Technology AG, 6340 Baar (CH)
(72) Erfinder: WEIDMANN, Jürg, 8404 Winterthur (CH); FRUNZ, Lukas, 8305 Dietlikon (CH); ZIMMERMANN, Jörg, 8400 Winterthur (CH)
(74) Vertreter: Sika Patent Attorneys
(86) Internationale Anmeldenummer: PCT/EP2016/072549
(87) Internationale Veröffentlichungsnummer: WO 2017/050900

(56) Entgegenhaltungen:
- EP-A2- 0 924 241
- EP-A2- 1 110 981
- WO-A1-2011/015780

## Beschreibung

### Technisches Gebiet

Die Erfindung betrifft die Verwendung eines Copolymers als Dispergiermittel in einer Bindemittelzusammensetzung enthaltend ein alkalisches Aktivierungsmittel. Weiter bezieht sich die Erfindung auf eine Bindemittelzusammensetzung sowie ein Verfahren zu deren Herstellung. Ein weiterer Aspekt der Erfindung betrifft einen Formkörper, erhältlich aus einer Bindemittelzusammensetzung.

### Stand der Technik

Die Herstellung von Zement generiert eine beträchtliche Menge an klimarelevantem CO₂. Um die CO₂-Emissonen zu reduzieren, kann Zement in Bindemittelzusammensetzungen teilweise durch latent hydraulische und/oder puzzolanische Zementzusatzstoffe wie z.B. Flugaschen, Schlacken oder Silicastaub ersetzt werden. Derartige Zusatzstoffe entstehen als Nebenprodukte in verschiedenen Industrieprozessen und sind daher in Bezug auf die CO₂-Bilanz vorteilhaft. Jedoch benötigt das Abbinden solcher Zementzusatzstoffe ohne zusätzliche Massnahmen deutlich länger als bei hydraulischem Zement. Dies ist insbesondere im Hinblick auf hohe Frühfestigkeiten von Bindemittelzusammensetzungen nachteilig. Es ist jedoch möglich, latent hydraulische und puzzolanische Zusatzstoffe beispielsweise durch alkalische bzw. basische Aktivierungsmittel zu aktivieren.

Um die Verarbeitbarkeit von zementösen Bindemittelzusammensetzungen bei möglichst geringem Wasser/Bindemittel-Verhältnis zu verbessern ist es zudem üblich, sogenannte Dispergiermittel als Verflüssiger einzusetzen. Dadurch wird sowohl eine gute Verarbeitbarkeit der flüssigen Bindemittelzusammensetzung als auch hohe mechanischen Festigkeit nach deren Aushärten erreicht. Als besonders effektive Dispergiermittel bekannt sind beispielsweise Kammpolymere auf Polycarboxylatbasis. Solche Kammpolymere verfügen über ein Polymerrückgrat und daran gebunden Seitenketten. Entsprechende Polymere sind z.B. in der EP 1 138 697 A1 (Sika AG) beschrieben.

Ebenfalls bekannt als Betonzusatzmittel sind Copolymermischungen wie sie z.B. in der EP 1 110 981 A2 (Kao) erwähnt sind. Die Copolymermischungen werden hergestellt, indem ethylenisch ungesättigte Monomere in einer freien radikalischen Polymerisationsreaktion umgesetzt werden, wobei das molare Verhältnis der beiden Monomere während dem Polymerisationsvorgang wenigstens einmal geändert wird.

Wie sich gezeigt hat, sind Kammpolymere auf Polycarboxylatbasis aber im Allgemeinen äusserst empfindlich gegenüber erhöhten basischen Bedingungen. Werden solche Dispergiermittel in Bindemittelzusammensetzungen zusammen mit alkalischen Aktivierungsmitteln eingesetzt, verlieren sie nach kurzer Zeit ihre Wirkung.

Es besteht daher nach wie vor Bedarf nach wirksamen Dispergiermitteln, welche auch in alkalisch aktivierten Bindemittelzusammensetzungen einsetzbar sind.

### Darstellung der Erfindung

Aufgabe der Erfindung ist es daher, Dispergiermittel bereitzustellen, bei welchen die vorstehend genannten Nachteile überwunden werden. Die Dispergiermittel sollen insbesondere in alkalisch aktivierten Bindemittelzusammensetzungen einsetzbar sein und dabei möglichst lange wirksam bleiben.

Überraschenderweise wurde gefunden, dass die erfindungsgemässe Aufgabe durch Verwendung eines Copolymers gemäss Anspruch 1 gelöst werden kann. Das Copolymer verfügt über ein Polymerrückgrat und daran gebundene Seitenketten und umfasst wenigstens eine ionisierbare Monomereinheit **M1** sowie wenigstens eine Seitenketten-tragende Monomereinheit **M2,** wobei das Copolymer in wenigstens einem Abschnitt **A** in einer Richtung entlang des Polymerrückgrats bezüglich der ionisierbare Monomereinheit **M1** und/oder bezüglich der Seitenketten-tragenden Monomereinheit **M2** eine Gradientenstruktur aufweist.

Wie sich gezeigt hat, sind die erfindungsgemäss verwendeten Copolymere im Vergleich mit herkömmlichen Kammpolymeren, welche z.B. rein statistische (= zufällige) oder blockweise Verteilungen der Monomereinheiten aufweisen, gegenüber alkalischen Bedingungen, wie sie z.B. in alkalisch aktivierten Bindemittelzusammensetzungen mit latent hydraulischen und/oder puzzolanischen Bindemitteln vorherrschen, überraschend unempfindlich.

Dies zeigt sich insbesondere darin, dass die Differenz der Fliessfähigkeit von angemachten kammpolymerhaltigen Bindemittelzusammensetzungen mit und ohne alkalische Aktivierungsmittel relativ gering ausfällt.

Somit bleiben die erfindungsgemässen Copolymere mit Gradientenstruktur als Dispergiermittel oder Verflüssiger selbst in alkalisch aktivierten Bindemittelzusammensetzungen über längere Zeit wirksam und ermöglichen eine gute Verarbeitbarkeit bei geringem Wasser/Zement-Verhältnis.

Die erfindungsgemässen Copolymere lassen sich somit in vorteilhafter Weise speziell zur Verflüssigung, zur Reduktion des Wasserbedarfs und/oder zur Verbesserung der Verarbeitbarkeit von mineralischen Bindemittelzusammensetzungen enthaltend alkalische Aktivierungsmittel verwenden.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Ein erster Aspekt der vorliegenden Erfindung betrifft die Verwendung eines Copolymers gem. Anspruch 1 als Dispergiermittel in einer Bindemittelzusammensetzung enthaltend ein alkalisches Aktivierungsmittel, wobei das Aktivierungsmittel insbesondere zur Aktivierung eines latent hydraulischen und/oder puzzolanischen Bindemittels geeignet ist, wobei das Copolymer ein Polymerrückgrat und daran gebundenen Seitenketten aufweist und wenigstens eine ionisierbare Monomereinheit **M1** sowie wenigstens eine Seitenketten-tragende Monomereinheit **M2** umfasst, und wobei das Copolymer in wenigstens einem Abschnitt A in einer Richtung entlang des Polymerrückgrats bezüglich der ionisierbare Monomereinheit **M1** und/oder bezüglich der Seitenketten-tragenden Monomereinheit **M2** eine Gradientenstruktur aufweist.

Mit anderen Worten liegt beim erfindungsgemässen Copolymer im wenigstens einen Abschnitt A in einer Richtung entlang des Polymerrückgrats bezüglich der ionisierbare Monomereinheit **M1** und/oder der Seitenketten-tragenden Monomereinheit **M2** ein Konzentrationsgradient vor.

Der Begriff "Gradientenstruktur" oder "Konzentrationsgradient" steht vorliegend insbesondere für eine kontinuierliche Änderung der lokalen Konzentration einer Monomereinheit in wenigstens einem Abschnitt in einer Richtung entlang des Rückgrats des Copolymers. Eine andere Bezeichnung für "Konzentrationsgradient" ist "Konzentrationsgefälle".

Der Konzentrationsgradient kann z.B. im Wesentlichen konstant sein. Dies entspricht einer linearen Ab- oder Zunahme der lokalen Konzentration der jeweiligen Monomereinheit im wenigstens einen Abschnitt **A** entlang der Richtung des Rückgrats des Copolymers. Es ist aber möglich, dass sich der Konzentrationsgradient entlang der Richtung des Rückgrats des Copolymers ändert. In diesem Fall liegt eine nichtlineare Ab- oder Zunahme der lokalen Konzentration der jeweiligen Monomereinheit vor. Der Konzentrationsgradient erstreckt sich dabei insbesondere über wenigstens 10, insbesondere wenigstens 14, bevorzugt wenigstens 20 oder wenigstens 40, Monomereinheiten des Copolymers.

Im Gegensatz dazu werden abrupte bzw. sprunghafte Konzentrationsänderungen von Monomeren, wie sie z.B. bei Blockcopolymeren auftreten, nicht als Konzentrationsgradient bezeichnet.

Der Ausdruck "lokale Konzentration" bezeichnet im vorliegenden Zusammenhang die Konzentration eines bestimmten Monomers an einer vorgegebenen Stelle des Polymerrückgrats. In der Praxis lässt sich die lokale Konzentration bzw. der Mittelwert der lokalen Konzentration z.B. durch Bestimmung der Monomerumsätze während der Herstellung des Copolymers ermitteln. Hierbei können die in einem bestimmten Zeitraum umgesetzten Monomere ermittelt werden. Die gemittelte lokale Konzentration entspricht dabei insbesondere dem Verhältnis des Molanteils eines bestimmten im betrachteten Zeitraum umgesetzten Monomers zur Gesamtmolmenge der im betrachteten Zeitraum umgesetzten Monomere.

Die Umsätze der Monomere können z.B. mit Hilfe von Flüssigkeitschromatographie, insbesondere Hochleistungsflüssigkeitschromatographie (HPLC), und unter Berücksichtigung der eingesetzten Mengen an Monomeren in an sich bekannter Weise bestimmt werden.

Im Besonderen ist es auch möglich, die Struktur der Copolymere durch Kernspinresonanzspektroskopie (NMR-Spektroskopie) zu analysieren und zu bestimmen. Insbesondere durch ¹H- und ¹³C-NMR-Spektroskopie lässt sich in an sich bekannter Weise aufgrund von Nachbargruppeneffekten im Copolymer und anhand von statistischen Auswertungen die Abfolge der Monomereinheiten im Copolymer bestimmen.

Das Copolymer kann auch mehr als einen Abschnitt **A** mit einer Gradientenstruktur aufweisen, insbesondere zwei, drei, vier oder noch mehr Abschnitte **A,** welche z.B. hintereinander angeordnet sind. Falls vorhanden, können in den verschiedenen Abschnitten **A** jeweils unterschiedliche Gradientenstrukturen oder Konzentrationsgefälle vorliegen.

Mit den Begriffen "ionisierbare Monomere" und "ionisierbare Monomereinheiten" sind insbesondere Monomere bzw. polymerisierte Monomere gemeint, welche bei einem pH-Wert > 10, insbesondere bei einem pH Wert > 12, in anionischer Form oder negativ geladen vorliegen. Dies sind insbesondere H-Donor-Gruppen oder Säuregruppen. Besonders bevorzugt sind die ionisierbaren Gruppen Säuregruppen, wie z.B. Carbonsäure-, Sulfonsäure-, Phosphorsäure- und/oder Phosphonsäuregruppen. Bevorzugt sind Carbonsäuregruppen. Die Säuregruppen können auch als Anionen in deprotonierter Form oder als Salz mit einem Gegenion bzw. Kation vorliegen.

Unter einer "Bindemittelzusammensetzung" wird vorliegend insbesondere eine Zusammensetzung enthaltend wenigstens ein organisches und/oder mineralisches Bindemittel verstanden. Bevorzugt handelt es sich um ein mineralisches Bindemittel.

Das "alkalische Aktivierungsmittel" ist insbesondere eine basisch oder alkalisch wirkende Substanz. Darunter wird insbesondere eine Substanz verstanden, welche bei Zugabe zu einer wässrigen Lösung deren pH-Wert anzuheben vermag. Unter einem alkalischen Aktivierungsmittel ist im Speziellen eine Substanz zu verstehen, welche geeignet ist zur Aktivierung des Abbindens oder Erhärtens von latent hydraulischen und/oder puzzolanischen Bindemitteln.

Die Bindemittelzusammensetzung ist insbesondere eine aktivierte Bindemittelzusammensetzung oder eine alkalisch aktivierte Bindemittelzusammensetzung, welche nebst dem Bindemittel zusätzlich ein alkalisches Aktivierungsmittel enthält. Insbesondere enthält die Bindemittelzusammensetzung ein Aktivierungsmittel zur Aktivierung eines latent hydraulischen und/oder puzzolanischen Bindemittels. Die alkalisch aktivierte Bindemittelzusammensetzung verfügt dabei insbesondere über einen höheren pH-Wert als eine analoge Bindemittelzusammensetzung, welche nicht aktiviert ist oder kein alkalisches Aktivierungsmittel enthält. Das alkalische Aktivierungsmittel kann in freier oder gelöster Form vorliegen, z.B. als Salz, und/oder wenigstens teilweise mit dem Bindemittel reagiert haben.

Unter dem Ausdruck "latent hydraulische und/oder puzzolanische Bindemittel" werden im vorliegenden Zusammenhang insbesondere Bindemittel verstanden, welche erst durch Einwirkung von Zusätzen bzw. Aktivierungsmittel hydraulisch abbinden oder erhärten. Insbesondere sind dies reaktive Zusatzstoffe, im Besonderen reaktive Zusatzstoffe vom Typ II gemäss Norm EN 1045-2.

Bevorzugt enthält die Bindemittelzusammensetzung ein latent hydraulisches und/oder puzzolanisches Bindemittel oder besteht daraus. Mögliche latent hydraulische und/oder puzzolanische Bindemittel sind insbesondere Schlacken, Puzzolane, Flugaschen, Silicastaub, Vulkanaschen, Metakaoline, Reishülsen (rice husk), gebrannter Schiefer und/oder calzinierter Ton. Bevorzugte latent hydraulische und/oder puzzolanische Bindemittel umfassen Schlacken, Puzzolane, Flugaschen und/oder Silicastaub. besonders bevorzugt ist vorliegend Flugasche. Ebenfalls vorteilhaft ist Schlacke.

Die Bindemittelzusammensetzung ist insbesondere eine zementöse oder zementhaltige Bindemittelzusammensetzung. Ein Anteil des Zements an der Bindemittelzusammensetzung beträgt dabei im Speziellen, wenigstens 5 Gew.-%, insbesondere 5 - 95 Gew.-%, bevorzugt 60 - 80 Gew.-%. Als Zement ist z.B. ein Portlandzement geeignet. Es können aber beispielsweise auch Kalziumaluminatzemente, Portlandkalksteinzemente und/oder Belitreiche Sulfoaluminatzement eingesetzt werden.

In einer vorteilhaften Ausführungsform weist die Bindemittelzusammensetzung insbesondere 5 - 95 Gew.-%, insbesondere 15 - 50 Gew.-%, besonders bevorzugt 20 - 40 Gew.-% an latent hydraulischem und/oder puzzolanischem Bindemittel, sowie 5 - 95 Gew.-%, bevorzugt 60 - 80 Gew.-%, an hydraulischem Bindemittel auf. Das hydraulische Bindemittel ist dabei mit Vorteil ein Zement, insbesondere ein Portlandzement.

Die Bindemittelzusammensetzung kann zusätzlich oder anstelle der vorstehend genannten Komponenten beispielsweise auch andere hydraulische Bindemittel, z.B. hydraulischen Kalk, beinhalten. Ebenso kann die Bindemittelzusammensetzung auch nichthydraulische Bindemittel enthalten, beispielsweise Gips, Anhydrit und/oder Weisskalk.

Weiter kann die Bindemittelzusammensetzung inerte Stoffe, z.B. Pigmente, Kalkstein oder Kalksteinmehl enthalten. Dies insbesondere in Kombination mit latent hydraulischen und/oder puzzolanischen Bindemitteln. Dadurch kann ein Teil der latent hydraulischen und/oder puzzolanischen Bindemitteln durch inerte Stoffe, z.B. Kalkstein, ersetzt werden. Ein Anteil der inerten Stoffe beträgt insbesondere 0.1 - 30 Gew.-%, bevorzugt 0.1 - 20 Gew.-%, weiter bevorzugt 0.1 - 15 Gew.-%.

Das Aktivierungsmittel umfasst mit Vorteil ein Alkalimetallsalz und/oder Erdalkalimetallsalz. Insbesondere handelt es sich dabei um ein Alkalimetallhydroxid, Alkalimetallcarbonat und/oder ein Alkalimetallsulfat. Bevorzugt sind NaOH, KOH, Na₂CO₃ und/oder Na₂SO₄. Besonders bevorzugt ist ein Alkalimetallhydroxid und/oder ein Alkalimetallcarbonat. Insbesondere ist das Aktivierungsmittel NaOH und/oder Na₂CO₃, bevorzugt NaOH.

Derartige Aktivierungsmittel rufen eine besonders starke Aktivierung der latenthydraulischen und puzzolanischen Bindemittel hervor und sind zugleich mit den erfindungsgemässen Copolymeren kompatibel. Damit sind hohe Frühfestigkeiten erreichbar bei gleichzeitig guter Verarbeitbarkeit der Bindemittelzusammensetzungen. Prinzipiell sind aber auch andere Aktivierungsmittel einsetzbar.

Eine Konzentration des Aktivierungsmittels beträgt mit Vorteil 0.001 - 5 Gew.-%, bevorzugt 0.1 - 1.5 Gew.-%, noch weiter bevorzugt 0.5 - 1.5 Gew.-%, jeweils bezogen auf das Gewicht des Bindemittels. Die Konzentrationen beziehen sich insbesondere auf das Gewicht des latent hydraulischen und/oder puzzolanischen Bindemittels.

Bevorzugt nimmt in dem wenigstens einem Abschnitt **A** eine lokale Konzentration der wenigstens einen ionisierbaren Monomereinheit **M1** entlang des Polymerrückgrats kontinuierlich zu, während eine lokale Konzentration der wenigstens einen Seitenketten-tragenden Monomereinheit **M2** entlang des Polymerrückgrats kontinuierlich abnimmt, oder umgekehrt.

Eine lokale Konzentration der ionisierbaren Monomereinheit **M1** am ersten Ende des wenigstens einen Abschnitts **A** ist insbesondere geringer als am zweiten Ende des Abschnitts **A,** während eine lokale Konzentration der Seitenketten-tragenden Monomereinheit **M2** am ersten Ende des Abschnitts **A** grösser ist als am zweiten Ende des Abschnitts **A,** oder umgekehrt.

Insbesondere gilt, dass bei einer Aufteilung des wenigstens einen Abschnitts **A** in 10 gleich lange Unterabschnitte, die gemittelte lokale Konzentration der wenigstens einen ionisierbaren Monomereinheit **M1** in den jeweiligen Unterabschnitten entlang des Polymerrückgrats in wenigstens 3, insbesondere in wenigstens 5 oder 8, aufeinanderfolgenden Unterabschnitten zunimmt, während die gemittelte lokale Konzentration der wenigstens einen Seitenketten-tragenden Monomereinheit **M2** in den jeweiligen Unterabschnitten entlang des Polymerrückgrats in wenigstens 3, insbesondere in wenigstens 5 oder 8, aufeinanderfolgenden Unterabschnitten abnimmt, oder umgekehrt.

Im Speziellen ist dabei eine Zunahme oder Abnahme der gemittelten lokalen Konzentration der wenigstens einen ionisierbaren Monomereinheit **M1** in den aufeinanderfolgenden Unterabschnitten im Wesentlichen konstant, während mit Vorteil eine Abnahme oder Zunahme der gemittelten lokalen Konzentration der wenigstens einen Seitenketten-tragenden Monomereinheit **M2** in den aufeinanderfolgenden Unterabschnitten im Wesentlichen ebenfalls konstant ist.

Ein gewichtsgemitteltes Molekulargewicht M_{W} des gesamten Copolymers liegt insbesondere im Bereich von 10'000 - 150'000 g/mol, vorteilhafterweise 12'000 - 80'000 g/mol, speziell 12'000 - 50'000 g/mol. Im vorliegenden Zusammenhang werden Molekulargewichte, wie das gewichtsgemittelte Molekulargewicht M_{W} oder das zahlengemitteltes Molekulargewicht Mₙ, durch Gel-Permeations-Chromatographie (GPC) mit Polyethylenglycol (PEG) als Standard bestimmt. Diese Technik ist dem Fachmann an sich bekannt.

Gemäss einer bevorzugten Ausführungsform ist die Polydispersität (= gewichtsgemitteltes Molekulargewicht M_{W} / zahlengemitteltes Molekulargewicht Mₙ) des Copolymers < 1.5. Insbesondere liegt die Polydispersität im Bereich von 1.0 - 1.4, speziell 1.1 - 1.3.

Gemäss einer vorteilhaften Ausführungsform weist der wenigstens eine Abschnitt **A** mit der Gradientenstruktur, bezogen auf eine Gesamtlänge des Polymerrückgrats, eine Länge von mindestens 30%, insbesondere mindestens 50%, bevorzugt mindestens 75% oder 90%, auf.

Vorteilhafterweise weist der wenigstens eine Abschnitt **A,** bezogen auf eine Gesamtanzahl an Monomereinheiten im Polymerrückgrat, einen Anteil von mindestens 30%, insbesondere mindestens 50%, bevorzugt mindestens 75% oder 90%, an Monomereinheiten auf.

Im Besonderen verfügt der der wenigstens eine Abschnitt **A,** bezogen auf das gewichtsgemittelte Molekulargewicht des gesamten Copolymers, über einen Gewichtsanteil von mindestens 30%, insbesondere mindestens 50%, bevorzugt mindestens 75% oder 90%.

Damit kommt der Abschnitt **A** mit dem Konzentrationsgradienten bzw. der Gradientenstruktur im besonderen Masse zum Tragen.

Der wenigstens eine Abschnitt **A** mit dem Konzentrationsgradienten umfasst mit Vorteil 5 - 70, insbesondere 7 - 40, bevorzugt 10 - 25 Monomereinheiten **M1** und 5 - 70, insbesondere 7 - 40, bevorzugt 10 - 25, Monomereinheiten **M2.**

Insbesondere besteht das Copolymer zu wenigstens 50 Mol-%, im Besonderen wenigstens 75 Mol-%, speziell wenigstens 90 Mol-% oder 95 Mol-%, aus ionisierbaren Monomereinheiten **M1** und Seitenketten-tragenden Monomereinheiten **M2.**

Vorteilhaft ist es, wenn wenigstens 30 Mol-%, insbesondere wenigstens 50 Mol-%, bevorzugt wenigstens 75 Mol-%, im Besonderen wenigstens 90 Mol-% oder wenigstens 95 Mol-%, der ionisierbaren Monomereinheiten **M1** im wenigstens einen Abschnitt **A,** welcher eine Gradientenstruktur aufweist, vor.

Ebenfalls vorteilhaft liegen wenigstens 30 Mol-%, insbesondere wenigstens 50 Mol-%, bevorzugt wenigstens 75 Mol-%, im Besonderen wenigstens 90 Mol-% oder wenigstens 95 Mol-%, der Seitenketten-tragenden Monomereinheiten **M2** im wenigstens einen Abschnitt, welcher eine Gradientenstruktur aufweist, vor. Speziell bevorzugt gelten die beiden letzten vorgenannten Bedingungen gleichzeitig.

Das Copolymer verfügt zusätzlich zum wenigstens einen Abschnitt **A,** welcher eine Gradientenstruktur aufweist, über einen weiteren Abschnitt **B,** wobei über den gesamten Abschnitt **B** im Wesentlichen eine konstante lokale Konzentration der Monomere und/oder eine statistischen oder zufällige Verteilung der Monomere vorliegt.

Abschnitt **B** kann z.B. aus Monomeren einer einzigen Sorte bestehen oder aus mehreren unterschiedlichen Monomeren, welche statistisch verteilt sind. Im Abschnitt **B** liegt jedoch insbesondere keine Gradientenstruktur bzw. kein Konzentrationsgradient entlang dem Polymerrückgrat vor.

Da Copolymer kann auch mehr als einen weiteren Abschnitt **B** aufweisen, z.B. zwei, drei, vier oder noch mehr Abschnitte **B,** welche sich in chemischer und/oder struktureller Hinsicht unterscheiden können.

Bevorzugt schliesst der wenigstens eine Abschnitt **A** unmittelbar an den weiteren Abschnitt **B** an.

Es hat sich überraschenderweise herausgestellt, dass derartige Copolymere im Hinblick auf die Verflüssigungswirkung und die Aufrechterhaltung derselben über die Zeit unter Umständen noch vorteilhafter sind.

Insbesondere umfasst der weitere Abschnitt **B** ionisierbare Monomereinheiten **M1** und/oder Seitenketten-tragende Monomereinheiten **M2.**

Der Abschnitt B umfasst, bezogen auf sämtliche darin enthaltenen Monomereinheiten, wenigstens 30 Mol-%, insbesondere wenigstens 50 Mol-%, bevorzugt wenigstens 75 Mol-% im Besonderen wenigstens 90 Mol.-% oder wenigstens 95 Mol-%, Seitenketten-tragenden Monomereinheiten **M2.** In diesem Fall ist ein allenfalls vorhandener Anteil von ionisierbaren Monomereinheiten **M1** im weiteren Abschnitt **B** kleiner 10 Mol-% oder kleiner als 5 Mol.-%, bezogen auf sämtliche Monomereinheiten **M2** im weiteren Abschnitt **B.** Insbesondere liegen im weiteren Abschnitt **B** keine ionisierbaren Monomereinheiten **M1** vor.

Es hat sich als zweckmässig erweisen, dass der weitere Abschnitt **B** insgesamt 5 - 70, insbesondere 7 - 40, bevorzugt 10 - 25 Monomereinheiten umfasst. Dabei handelt es sich insbesondere um Monomereinheiten **M1** und/oder **M2.** Ein Verhältnis der Anzahl Monomereinheiten im wenigstens einen Abschnitt **A** mit Gradientenstruktur zur Anzahl Monomereinheiten im wenigstens einen weiteren Abschnitt **B** mit der im Wesentlichen konstanten lokalen Konzentration liegt mit Vorteil im Bereich von 99:1 - 1:99, insbesondere 10:90 - 90:10, bevorzugt 80:20 - 20:80, speziell 70:30 - 30:70.

Die Seitenketten-tragende Monomereinheit **M2** beinhaltet insbesondere Polyalkyenoxidseitenketten, insbesondere Polyethylenoxid- und/oder Polypropylenoxidseitenketten.

Die ionisierbare Monomereinheit **M1** umfasst bevorzugterweise Säuregruppen, insbesondere Carbonsäure-, Sulfonsäure-, Phosphorsäure- und/oder Phosphonsäuregruppen.

Die ionisierbare Monomereinheit **M1** weist eine Struktur der Formel I auf,

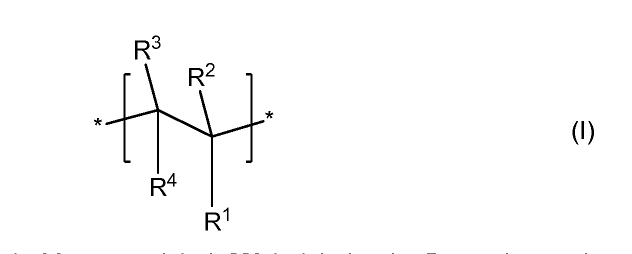

Die Seitenketten-tragende Monomereinheit **M2** beinhaltet eine Struktur der der Formel II 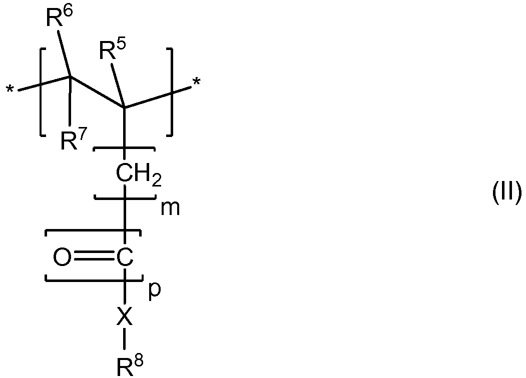 wobei
R¹, jeweils unabhängig voneinander, für -COOM, -SO₂-OM, -O-PO(OM)₂ und/oder -PO(OM)₂ steht,
R², R³, R⁵ und R⁶, jeweils unabhängig voneinander, für H oder eine Alkylgruppe mit 1 bis 5 Kohlenstoffatomen stehen,
R⁴ und R⁷, jeweils unabhängig voneinander, für H, -COOM oder eine Alkylgruppe mit 1 bis 5 Kohlenstoffatomen stehen,
   oder wobei R¹ mit R⁴ einen Ring bildet zu -CO-O-CO-,
M, unabhängig voneinander, H⁺, ein Alkalimetallion, ein Erdalkalimetallion, ein zwei oder dreiwertiges Metallion, ein Ammoniumion oder eine organische Ammoniumgruppe darstellt;
m = 0, 1 oder 2 ist,
p = 0 oder 1 ist,
X, jeweils unabhängig voneinander, für -O- oder -NH- steht,
R⁸ für eine Gruppe der Formel -[AO]ₙ-R^{a} steht,
wobei A = C₂- bis C₄-Alkylen, R^{a} für H, eine C₁- bis C₂₀-Alkylgruppe, - Cycloalkylgruppe oder -Alkylarylgruppe steht,
und n = 2 - 250, insbesondere 10 - 200 ist.

Mit Vorteil liegt ein Molverhältnis der ionisierbaren Monomereinheiten **M1** zu den Seitenketten-tragenden Monomereinheiten **M2** im Bereich von 0.5 - 6, insbesondere 0.7 - 4, bevorzugt 0.9 - 3.8, weiter bevorzugt 1.0 - 3.7 oder 2 - 3.5 liegt. Dadurch wird eine optimale Dispergierwirkung in mineralischen Bindemittelzusammensetzungen erreicht.

Insbesondere sind R¹ = COOM, R² = H oder CH₃, R³ = R⁴ = H. Damit lässt sich das Copolymer auf der Basis von Acryl- oder Methacrylsäuremonomeren herstellen, was aus ökonomischer Sicht interessant ist. Zudem ergibt sich mit derartigen Copolymeren im vorliegenden Zusammenhang eine besonders gute Dispergierwirkung.

Ebenfalls vorteilhaft können Copolymere mit R¹ = COOM, R² = H, R³ = H und R⁴ = COOM sein. Solche Copolymere lassen sich auf der Basis von Maleinsäuremonomeren herstellen.

Die Gruppe X in der ionisierbaren Monomereinheit **M2** steht mit Vorteil bei wenigstens 75 Mol-%, insbesondere bei wenigstens 90 Mol-%, speziell bei wenigstens 95 Mol-% oder wenigstens 99 Mol-% aller Monomereinheiten **M2** für
-O- (= Sauerstoffatom).

Vorteilhafterweise sind R⁵ = H oder CH₃, R⁶ = R⁷ = H und X = -O-. Derartige Copolymere lassen sich z.B. ausgehend von (Meth)acrylsäureestern, Vinyl-, (Meth)allyl- oder Isoprenolethern herstellen.

Bei einer besonders vorteilhaften Ausführungsform stehen R² und R⁵ jeweils für Mischungen aus 40 - 60 Mol-% H und 40 - 60 Mol-% -CH₃.

Gemäss weiteren vorteilhaften Ausführungsform ist R¹ = COOM, R² = H, R⁵ = -CH₃ und R³ = R⁴ = R⁶ = R⁷ = H.

Bei einer anderen vorteilhaften Ausführungsform ist R¹ = COOM, R² = R⁵ = H oder -CH₃ und R³ = R⁴ = R⁶ = R⁷ = H.

Speziell vorteilhaft sind Copolymere bei welchen: R¹ = COOM; R² und R⁵ jeweils unabhängig voneinander, für H, -CH₃ oder Mischungen daraus stehen; R³ und R⁶ jeweils unabhängig voneinander gleich H oder -CH₃ sind, bevorzugt H; R⁴ und R⁷ jeweils unabhängig voneinander für H oder -COOM stehen, bevorzugt für H.

Der Rest R⁸ in der Seitenketten-tragenden Monomereinheit **M2** besteht, bezogen auf sämtliche Reste R⁸ im Copolymer, insbesondere zu wenigstens 50 Mol-%, insbesondere wenigstens 75 Mol-%, bevorzugt wenigstens 95 Mol-% oder wenigsten 99 Mol-%, aus einem Polyethylenoxid. Ein Anteil an Ethylenoxideinheiten bezogen auf sämtliche Alkylenoxideinheiten im Copolymer beträgt insbesondere mehr als 75 Mol-%, insbesondere mehr als 90 Mol-%, bevorzugt mehr als 95 Mol-% und im Speziellen 100 Mol-%.

Insbesondere weist R⁸ im Wesentlichen keine hydrophoben Gruppen auf, insbesondere keine Alkylenoxide mit drei oder mehr Kohlenstoffatomen. Damit ist insbesondere gemeint, dass ein Anteil an Alkylenoxiden mit drei oder mehr Kohlenstoffatomen bezogen auf sämtliche Alkylenoxide weniger als 5 Mol-%, insbesondere weniger als 2 Mol-%, bevorzugt weniger als 1 Mol-% oder weniger als 0.1 Mol-% beträgt. Im Besonderen liegen keine Alkylenoxide mit drei oder mehr Kohlenstoffatomen vor oder deren Anteil beträgt 0 Mol-%.

R^{a} steht mit Vorteil für H und/oder eine Methylgruppe. Besonders vorteilhaft ist A = C₂-Alkylen und R^{a} steht für H oder eine Methylgruppe.

Insbesondere ist der Parameter n = 10 - 150, insbesondere n = 15 - 100, bevorzugt n = 17 - 70, im Speziellen n = 19 - 45 oder n = 20 - 25. Im Besonderen in den genannten Vorzugsbereichen werden dadurch ausgezeichnete Dispergierwirkungen erzielt.

Weiter kann es vorteilhaft sein, wenn das Copolymer wenigstens eine weitere Monomereinheit **MS** umfasst, welche sich insbesondere von den Monomereinheiten **M1** und **M2** chemisch unterscheidet. Im Besonderen können mehrere unterschiedliche weitere Monomereinheiten **MS** vorliegen. Dadurch können die Eigenschaften des Copolymer weiter modifiziert und beispielsweise im Hinblick auf spezielle Anwendungen angepasst werden.

Besonders vorteilhaft ist die wenigstens eine weitere Monomereinheit **MS** eine Monomereinheit der Formel III: 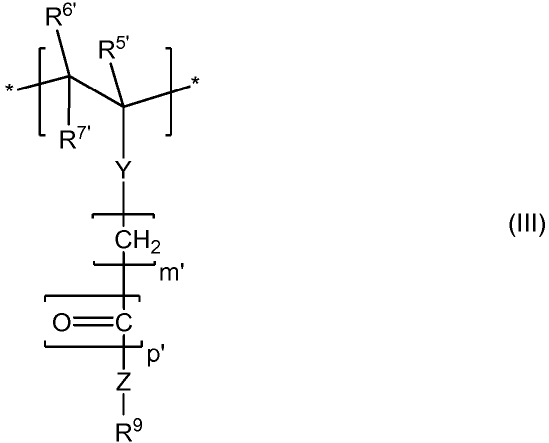 wobei
R^{5'}, R^{6'}, R^{7'}, m' und p' wie R⁵, R⁶, R⁷, m und p definiert sind;
Y, jeweils unabhängig voneinander, für eine chemische Bindung oder -O- steht;
Z, jeweils unabhängig voneinander, für eine chemische Bindung, -O- oder -NH- steht;
R⁹, jeweils unabhängig voneinander, für eine Alkylgruppe, Cycloalkylgruppe, Alkylarylgruppe, Arylgruppe, Hydroxyalkylgruppe oder eine Acetoxyalkylgruppe, jeweils mit 1 - 20 C-Atomen, steht.

Vorteilhaft sind z.B. weitere Monomereinheiten **MS** wobei m' = 0 ist, p' = 0 ist, Z und Y eine chemische Bindung darstellen und R⁹ für eine Alkylarylgruppe mit 6 - 10 C-Atomen steht.

Auch geeignet sind insbesondere weitere Monomereinheiten **MS** bei welchen m' = 0 ist, p' = 1 ist, Y für -O- steht, Z eine chemische Bindung darstellt und R⁹ für eine Alkylgruppe mit 1 - 4 C-Atomen steht.

Weiter sind weitere Monomereinheit **MS** geeignet wobei m' = 0 ist, p' = 1 ist, Y für eine chemische Bindung steht, Z für -O- steht und R⁹ eine Alkylgruppe und/oder eine Hydroxyalkylgruppe mit 1 - 6 C-Atomen darstellt.

Besonders vorteilhaft besteht die wenigstens eine weitere Monomereinheit **MS** aus einpolymerisiertem Vinylacetat, Styrol und/oder Hydroxyalkyl(meth)acrylat, insbesondere Hydroxyethylacrylat.

Die wenigstens eine weitere Monomereinheit **MS** kann Bestandteil des wenigstens einen Abschnitts **A** und/oder des weiteren Abschnitts **B** sein. Auch möglich ist es, dass die wenigstens eine weitere Monomereinheit **MS** Bestandteil eines zusätzlichen Abschnitts des Copolymers ist. Insbesondere können in den verschiedenen Abschnitten unterschiedliche Monomereinheiten **MS** vorliegen.

Falls im wenigstens einen Abschnitt **A** vorhanden, weist die wenigstens eine weitere Monomereinheit **MS** im ersten Abschnitt **A** mit Vorteil einen Anteil von 0.001 - 80 Mol-%, bevorzugt 20 - 75 Mol-%, speziell 30 - 70 Mol-%, bezogen auf sämtliche Monomereinheiten im wenigstens einen Abschnitt **A,** auf.

Sofern im weiteren Abschnitt **B** vorhanden weist die wenigstens eine weitere Monomereinheit **MS** im weiteren Abschnitt **B** insbesondere einen Anteil von 0.001 -80 Mol-%, bevorzugt 20 - 75 Mol-%, speziell 30 - 70 Mol-% oder 50 - 70 Mol-%, bezogen auf sämtliche Monomereinheiten im weiteren Abschnitt **B,** auf.

Gemäss einer vorteilhaften Ausführungsform ist im wenigstens einen Abschnitt **A** und/oder im weiteren Abschnitt **B** die wenigstens eine weitere Monomereinheit **MS** mit einem Anteil von Anteil von 20 - 75 Mol-%, speziell 30 - 70 Mol-%, bezogen auf sämtliche Monomereinheiten im jeweiligen Abschnitt, vorhanden.

Es ist aber beispielsweise auch möglich, dass das Copolymer, wenigstens zwei unterschiedliche Abschnitte **A** und/oder wenigstens zwei unterschiedliche weitere Abschnitte **B** enthält.

Ein besonders vorteilhaftes Copolymer weist wenigstens eines oder mehrere der folgenden Merkmale auf:
(i) Das Copolymer besteht zu wenigstens 75 Mol-%, speziell wenigstens 90 Mol-% oder 95 Mol-%, aus ionisierbaren Monomereinheiten **M1** und Seitenketten-tragenden Monomereinheiten **M2**;
(ii) Das Copolymer umfasst oder besteht aus wenigstens einem Abschnitt **A** und einem weiteren Abschnitt **B**;
(iii) Der weitere Abschnitt **B** umfasst Seitenketten-tragende Monomereinheiten **M2,** insbesondere wenigstens 50 Mol-%, bevorzugt wenigstens 75 Mol-% im Besonderen wenigstens 90 Mol.-% oder wenigstens 95 Mol-%, bezogen auf sämtliche im Abschnitt **B** enthaltenen Monomereinheiten. Ein allenfalls vorhandener Anteil von ionisierbaren Monomereinheiten **M1** im weiteren Abschnitt **B** ist kleiner als 25 Mol-%, insbesondere kleiner 10 Mol-% oder kleiner als 5 Mol.-%, bezogen auf sämtliche Monomereinheiten **M2** im weiteren Abschnitt **B.**
(iv) Ein Molverhältnis der Monomereinheiten **M1** zu den Monomereinheiten **M2** im Copolymer liegt im Bereich von 0.5 - 6, bevorzugt 0.8 - 3.5;
(v) R¹ steht für COOM;
(vi) R² und R⁵ stehen für H oder CH₃, bevorzugt CH₃;
(vii) R³ = R⁴ = R⁶ = R⁷ = H;
(viii) m = 0 und p = 1;
(ix) X = -O-
(x) A = C₂-Alkylen und n = 10 - 150, bevorzugt 15 - 50;
(xi) R^{a} = H oder -CH₃, bevorzugt CH₃;

Speziell bevorzugt ist ein Copolymer, bestehend aus den Abschnitten **A** und **B,** welches zumindest sämtliche Merkmale (i) - (iv) aufweist. Weiter bevorzugt ist dabei ein Copolymer welches sämtliche Merkmale (i) - (xi) aufweist. Noch weiter bevorzugt ist ein Copolymer welches sämtliche Merkmale (i) - (xi) in den jeweils bevorzugten Ausführungen realisiert.

Beim Copolymer handelt es sich im Besonderen um ein Polymer mit im Wesentlichen linearer Struktur. Damit ist im Besonderen gemeint, dass sämtliche Monomereinheiten des Copolymers in einer einzigen und/oder unverzweigten Polymerkette angeordnet sind. Im Speziellen verfügt das Copolymer nicht über eine sternförmige Struktur und/oder das Copolymer ist nicht Bestandteil eines verzweigten Polymers. Insbesondere ist das Copolymer nicht Bestandteil eines Polymers bei welchen an einem zentralen Molekül mehrere, insbesondere drei oder mehr, in unterschiedliche Richtungen verlaufende Polymerketten angebracht sind.

Das Copolymer kann in flüssiger oder fester Form vorliegen. Besonders bevorzugt liegt das Copolymer als Bestandteil einer Lösung oder Dispersion vor, wobei ein Anteil des Copolymers insbesondere 10 - 90 Gew.-%, bevorzugt 25 - 65 Gew.-% beträgt. Dadurch lässt sich das Copolymer beispielsweise sehr gut zu Bindemittelzusammensetzungen zugeben. Wird das Copolymer in Lösung, insbesondere in wässriger Lösung, hergestellt, kann zudem auf eine weitere Aufbereitung verzichtet werden.

Entsprechend einer anderen vorteilhaften Ausführungsform liegt das Copolymer in festem Aggregatszustand vor, insbesondere in Form eines Pulvers, in Form von Pellets und/oder Platten. Dadurch wird insbesondere der Transport der Copolymere vereinfacht. Lösungen oder Dispersionen der Copolymere können z.B. durch Sprühtrocknung in den festen Aggregatszustand überführt werden. Das erfindungsgemäss verwendete Polymer ist insbesondere erhältlich durch das nachstehend beschrieben Verfahren.

Ein weiterer Aspekt der vorliegenden Erfindung betrifft daher ein Verfahren zur Herstellung eines Copolymers, insbesondere eines Copolymers wie es vorstehend beschrieben ist, wobei ionisierbare Monomere **m1** und Seitenketten-tragende Monomere **m2** unter Ausbildung eines Konzentrationsgradienten und/oder einer Gradientenstruktur zusammen polymerisiert werden. Die ionisierbaren Monomere **m1** entsprechen nach erfolgter Polymerisation dabei den oben genannten ionisierbaren Monomereinheiten **M1** des Copolymers. Ebenso entsprechen die Seitenkettentragenden Monomere **m2** nach erfolgter Polymerisation den oben beschriebenen Seitenketten-tragenden Monomereinheiten **M2.**

Insbesondere wird während der Polymerisation ein Molverhältnis von freien ionisierbaren Monomere **m1** zu freien Seitenketten-tragenden Monomeren **m2** wenigstens zeitweise verändert. Im Speziellen beinhaltet die Veränderung des Molverhältnisses eine kontinuierliche Änderung. Damit lässt sich in gut kontrollierbarer Weise ein Konzentrationsgradient bzw. eine Gradientenstruktur ausbilden.

Optional erfolgt zusätzlich eine schrittweise Änderung des Molverhältnisses der der freien ionisierbaren Monomere **m1** zu den freien Seitenketten-tragenden Monomeren **m2.** Dies insbesondere zeitlich bevor die kontinuierliche Änderung durchgeführt wird. Dadurch ist z.B. ein Copolymer mit einem weiteren Abschnitt **B** erhältlich.

Gemäss einer bevorzugt Ausführungsform werden in einem ersten Schritt a) ein Teil der ionisierbaren Monomere **m1** im Wesentlichen in Abwesenheit von Seitenketten-tragenden Monomeren **m2** umgesetzt oder polymerisiert und nach Erreichen eines vorbestimmten Umsatzes in einem zweiten Schritt b) die noch nicht umgesetzten ionisierbaren Monomere **m1** zusammen mit den Seitenketten-tragenden Monomeren **m2** polymerisiert. Dadurch ist in einfacher und kostengünstiger Art und Weise ein Copolymer mit einem weiteren Abschnitt **B,** welcher im Wesentlichen aus polymerisierten ionisierbaren Monomeren **m1** besteht, herstellbar.

Ebenfalls vorteilhaft kann in einem ersten Schritt a) ein Teil der Seitenkettentragenden Monomere **m2** im Wesentlichen in Abwesenheit von ionisierbaren Monomeren **m1** umgesetzt oder polymerisiert werden und nach Erreichen eines vorbestimmten Umsatzes in einem zweiten Schritt b) die noch nicht umgesetzten Seitenketten-tragenden Monomere **m2** zusammen mit den ionisierbaren Monomeren **m1** polymerisiert werden. Dadurch ist in einfacher und kostengünstiger Art und Weise ein Copolymer mit einem weiteren Abschnitt **B,** welcher im Wesentlichen aus polymerisierten Seitenkettentragenden Monomere Monomeren **m2** besteht, erhältlich.

Dabei ist es vorteilhaft, die Schritte a) und b) unmittelbar aufeinander folgend durchzuführen. Dadurch können die Polymerisationsreaktion in den Schritten a) und b) bestmöglich aufrecht zu erhalten werden.

Die Polymerisation in Schritt a) wird insbesondere so lange durchgeführt, bis 0.1 - 85 Mol-%, insbesondere 1 - 74 Mol-%, bevorzugt 10 - 70 Mol-%, im Besonderen 25 - 70 Mol %, speziell 28 - 50 Mol-% oder 30 - 50 Mol-% der ionisierbaren Monomere **m1** bzw. der Seitenkettentragenden Monomere **m2** umgesetzt oder polymerisiert sind. Besonders vorteilhaft ist ein Umsatz von 40 - 45 Mol-%

Der Umsatz der Monomere **m1** und **m2** bzw. der Fortschritt der Polymerisation kann z.B. mit Hilfe von Flüssigkeitschromatographie, insbesondere Hochleistungsflüssigkeitschromatographie (HPLC), in an sich bekannter Weise kontrolliert werden.

Insbesondere weisen die ionisierbaren Monomere **m1** eine Struktur gemäss der Formel IV auf: 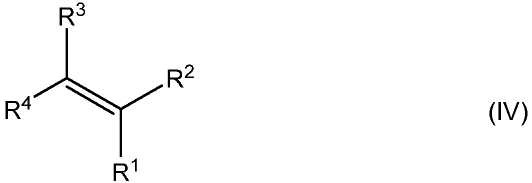 und die Seitenketten-tragenden Monomere **m2** verfügen über eine Struktur gemäss der Formel V: 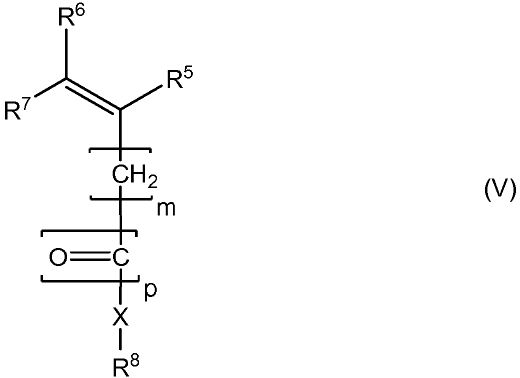 wobei R¹, R², R³, R⁴, R⁵, R⁶, R⁷, R⁸, m, p und X wie vorstehend beschrieben definiert sind.

Gemäss einer weiteren vorteilhaften Ausführungsform gekennzeichnet, liegt während der Polymerisation oder während Schritt a) und/oder während Schritt b) wenigstens ein weiteres polymerisierbares Monomer ms vor, wobei es sich insbesondere um ein Monomer der Formel VI handelt: 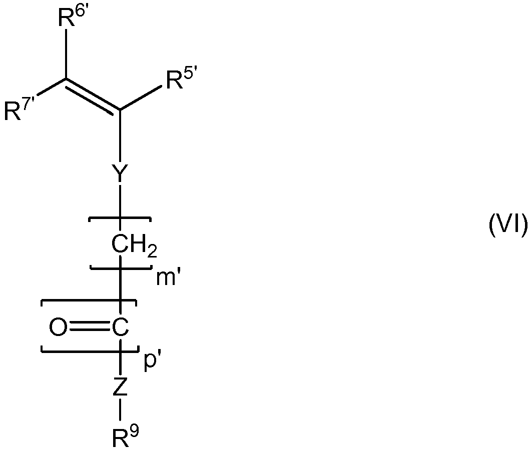 wobei R^{5'}, R^{6'}, R^{7'}, R⁹, m', p', Y und Z wie vorstehend definiert sind.

Das weitere Monomer **ms** entspricht nach erfolgter Polymerisation der oben beschriebenen weiteren Monomereinheit **MS.**

Besonders vorteilhaft ist das wenigstens eine weitere Monomer **ms** ausgewählt aus Vinylacetat, Styrol, N-vinyl-pyrrolidon und/oder Hydroxyalkyl(meth)acrylat, insbesondere Hydroxyethylacrylat.

Das Verfahren kann z.B. durchgeführt werden, indem in Schritt a) Monomere **m2** in einem Lösungsmittel, z.B. Wasser, vorgelegt und sodann zu einem weiteren Abschnitt **B** polymerisiert werden. Sobald der gewünschte Umsatz an Monomer **m2** erreicht ist (z.B. 30 - 45 Mol-%; siehe oben), werden ohne zeitliche Verzögerung in Schritt b) Monomere **m1** zugegeben und die Polymerisation fortgesetzt. Dabei werden die Monomere **m1** und die noch nicht umgesetzten Monomere **m2** an den bereits gebildeten Abschnitt **B** angefügt, wodurch ein der wenigstens eine Abschnitt **A** mit einer Gradientenstruktur gebildet wird. Die Polymerisation wird mit Vorteil wiederum so lange weitergeführt, bis der gewünschte Umsatz an Monomer **m1** (z.B. 75 - 95 Mol-%, insbesondere 80 - 92 Mol-%; siehe vorstehend) erreicht ist. Dadurch wird z.B. ein Copolymer umfassend wenigstens einen Abschnitt **A** und einen damit verbundenen weiteren Abschnitt **B** erhalten.

Gemäss einer weiteren vorteilhaften Ausführungsform liegt in Schritt a) und/oder in Schritt b) wenigstens ein weiteres wie vorstehend beschriebenes polymerisierbares Monomer **ms** vor. Das wenigstens eine weitere polymerisierbare Monomer **ms** wird in diesem Fall insbesondere zusammen mit dem Monomer **m1** und/oder dem Monomer **m2** polymerisiert.

Es ist aber auch möglich, zusätzlich zu Schritt a) und Schritt b) einen weiteren Schritt c) der Polymerisation des wenigstens eines weiteren polymerisierbaren Monomer **ms** vorzusehen. Dadurch kann ein Copolymer mit einem zusätzlichen Abschnitt **C** hergestellt werden. Insbesondere kann Schritt c) zeitlich zwischen Schritt a) und Schritt b) durchgeführt. Damit wird der zusätzliche Abschnitt **C** räumlich zwischen den Abschnitten **A** und **B** angeordnet.

Es ist aber auch möglich, Schritt c) vor oder nach den Schritten Schritt a) und b) durchzuführen. Damit kann der zusätzliche Abschnitt **C** nach Abschnitt **A** oder vor Abschnitt **B** angeordnet werden.

Die Polymerisation erfolgt mit Vorteil durch eine kontrollierte freie radikalische Polymerisation und/oder durch eine lebende freie radikalische Polymerisation. Besonders bevorzugt ist eine Reversible Additions-Fragmentierungs Kettenübertragungs-Polymerisation (RAFT).

Eine radikalische Polymerisation kann grundsätzlich in drei Schritte aufgeteilt werden: Initiierung, Wachstum und Termination.

Die "lebende freie radikalische Polymerisation" wird auch als "kontrollierte freie radikalische Polymerisation" bezeichnet und ist dem Fachmann in anderen Zusammenhängen an sich bekannt. Der Begriff steht für Kettenwachstumsprozesse, bei denen im Wesentlichen keine Kettenabbruchsreaktionen (Transfer und Terminierung) stattfinden. Die lebende freie radikalische Polymerisation erfolgt somit im Wesentlichen unter Abwesenheit von irreversiblen Übertragungs- oder Abbruchreaktionen. Diese Kriterien können beispielsweise erfüllt werden, wenn der Polymerisationsinitiator schon sehr früh während der Polymerisation verbraucht ist und ein Austausch zwischen den verschieden reaktiven Spezies geben ist, der mindestens so schnell abläuft wie die Kettenfortpflanzung selbst. Die Zahl der aktiven Kettenenden bleibt während der Polymerisation insbesondere im Wesentlichen konstant. Dadurch wird ein im Wesentlichen zeitgleiches und während dem gesamten Polymerisationsprozess anhaltendes Wachstum der Ketten ermöglicht. Dies ergibt entsprechend eine enge Molekulargewichtsverteilung bzw. Polydispersität.

Mit anderen Worten zeichnet sich die kontrollierte radikalische Polymerisation oder die lebend radikalische Polymerisation im Besonderen durch reversible oder gar fehlende Abbruch- oder Übertragungsreaktionen aus. Nach der Initiierung bleiben demnach die aktiven Zentren während der ganzen Reaktion erhalten. Alle Polymerketten werden gleichzeitig gebildet (initiiert) und wachsen kontinuierlich über die gesamte Zeit. Die radikalische Funktionalität des aktiven Zentrums bleibt im Idealfall auch noch nach vollständigem Umsatz der zu polymerisierenden Monomere erhalten. Diese besondere Eigenschaft der kontrollierten Polymerisationen ermöglicht es, durch sequenzielle Zugabe von verschiedenen Monomeren wohldefinierte Strukturen wie Gradienten- oder Blockcopolymere herzustellen.

Im Gegensatz dazu laufen bei der herkömmlichen freien radikalischen Polymerisation wie sie z.B. in der EP 1 110 981 A2 (Kao) beschrieben ist, alle drei Schritte (Initiierung, Wachstum und Termination) parallel ab. Die Lebensdauer der aktiven, wachsenden Ketten ist jeweils sehr gering und die Monomerkonzentration während des Kettenwachstums einer Kette bleibt im Wesentlichen konstant. Die so gebildeten Polymerketten verfügen über keine aktiven Zentren die für eine Anlagerung weiterer Monomere geeignet sind. Dieser Mechanismus lässt also keine Kontrolle über die Struktur der Polymere zu. Die Darstellung von Gradienten- oder Blockstrukturen mittels konventioneller freier radikalischer Polymerisation ist daher üblicherweise nicht möglich (siehe z.B."Polymere: Synthese, Synthese und Eigenschaften"; Autoren: Koltzenburg, Maskos, Nuyken; Verlag: Springer Spektrum; ISBN: 97-3-642-34772-6 sowie "Fundamentals of Controlled/living Radical Polymerization"; Verlag: Royal Society of Chemistry; Editoren: Tsarevsky, Sumerlin; ISBN: 978-1-84973-425-7).

Somit unterscheidet sich die "lebende freie radikalische Polymerisation" klar von der herkömmlichen "freien radikalischen Polymerisation" bzw. der nicht lebend bzw. nicht kontrolliert durchgeführten freien Polymerisation.

Bei der reversiblen Additions-Fragmentierungs-Kettenübertragungs-Polymerisation (RAFT) wird die Kontrolle der Polymerisation wird durch eine reversible Kettenübertragungsreaktionen erreicht. Konkret addiert eine wachsende Radikalkette ein sogenannte RAFT-Agens, was zur Bildung eines intermediären Radikals führt. Das RAFT-Agens fragmentiert sodann und zwar so, dass erneut ein RAFT-Agens und ein für die Propagation zur Verfügung stehendes Radikal zurückgebildet werden. Auf diese Weise wird die Propagationswahrscheinlichkeit über alle Ketten gleichverteilt. Die durchschnittliche Kettenlänge des gebildeten Polymers ist proportional zur RAFT-Agens Konzentration sowie zum Reaktionsumsatz. Als RAFT-Agentien werden insbesondere organische Schwefelverbindungen verwendet. Im Besonderen geeignet sind Dithioester, Dithiocarbamate, Trithiocarbonate und/oder Xanthate. Die Initiierung der Polymerisation kann auf konventionellem Weg mittels Initiatoren oder thermischer Selbstinitiierung erfolgen.

Bevorzugt erfolgen die Polymerisation oder die Schritte a) und/oder b) in einer wässrigen Lösung. Insbesondere erfolgen die Polymerisationen in beiden Schritten a) und b) in wässrigen Lösungen. Dies gilt entsprechend auch für Schritt c), sofern dieser durchgeführt wird. Wie es sich gezeigt hat, wirkt sich dies positiv auf die Dispergierwirkung des Copolymers aus.

Es ist aber auch möglich andere Lösungsmittel vorzusehen, beispielsweise Ethanol.

Als Initiator für die Polymerisation wird insbesondere ein Radikalstarter, bevorzugt eine Azoverbindung und/oder ein Peroxid eingesetzt. Geeignete Peroxide sind z.B. ausgewählt aus der Gruppe bestehend aus Dibenzoylperoxid (DBPO), Di-tert-butylperoxid und Diacetylperoxid.

Besonders vorteilhaft als Initiator ist eine Azoverbindung, wie beispielsweise Azobisisobutyronitril (AIBN), *α,α'*-Azodiisobutyramidine dihydrochloride (AAPH) oder Azo-bis-isobutyramidin (AIBA). Andere Radikalstarter, z.B. Natriumpersulfat oder Di-tert-butylhyponitrit, können unter Umständen aber auch verwendet werden.

Falls die Polymerisation in einer wässrigen Lösung oder in Wasser erfolgt, wird mit Vorteil *α,α'*-Azodiisobutyramidine dihydrochloride (AAPH) als Initiator verwendet.

Bevorzugt sind während der Polymerisation oder in den Schritten a) und/oder b) einer oder mehrere Vertreter aus der Gruppe bestehend aus Dithioester, Dithiocarbamate, Trithiocarbonate und Xanthate anwesend. Dies sind sogenannte "RAFT-Agentien", welche es ermöglichen, den Polymerisationsprozess zu kontrollieren. Dies gilt entsprechend auch für Schritt c), sofern dieser durchgeführt wird.

Insbesondere erfolgt die Polymerisation oder Schritt a), Schritt b) und/oder Schritt c) bei einer Temperatur in Bereich von 50 - 95°C, insbesondere 70 90°C.

Vorteilhafterweise wird unter Inertgasatmosphäre gearbeitet, z.B. unter Stickstoffatmosphäre.

Entsprechend betrifft die vorliegende Erfindung in einem weiteren Aspekt auch die Verwendung eines Copolymer, welches erhältlich ist durch das vorstehend beschriebene Verfahren, als Dispergiermittel in einer Bindemittelzusammensetzung enthaltend ein alkalisches Aktivierungsmittel, wobei das Aktivierungsmittel insbesondere zur Aktivierung eines latent hydraulischen und/oder puzzolanischen Bindemittels geeignet ist. Die Bindemittelzusammensetzung sowie das Aktivierungsmittel sind dabei wie vorstehend beschreiben definiert.

Ein weiterer Aspekt der Erfindung betrifft eine Bindemittelzusammensetzung enthaltend ein mineralisches Bindemittel und ein alkalisches Aktivierungsmittel sowie ein wie vorstehend definiertes Copolymer.

Zudem liegt in der Bindemittelzusammensetzung insbesondere ein latent hydraulisches und/oder puzzolanisches Bindemittel vor. Das Aktivierungsmittel ist mit Vorteil ein wie vorstehend beschriebenes Aktivierungsmittel, im Besonderen für latent hydraulische und/oder puzzolanische Bindemittel. Derartige Bindemittelzusammensetzungen lassen sich beispielsweise zusammen mit Aggregaten wie Sand, Kies und/oder Gesteinskörnungen für die Herstellung von Mörteln und/oder Beton einsetzen.

Wie sich herausgestellt hat, lassen sich wässrige Aufschlämmungen solcher Bindemittelzusammensetzungen auch bei hohem Anteil an latenten und/oder puzzolanischen Bindemitteln gut verarbeiten. Zudem werden ausreichende Frühfestigkeiten und hohe Festigkeiten nach dem Aushärten der Bindemittelzusammensetzungen erreicht.

Die mineralische Bindemittelzusammensetzung ist insbesondere eine verarbeitbare und/oder mit Wasser angemachte mineralische Bindemittelzusammensetzung.

Ein Gewichtsverhältnis von Wasser zu Bindemittel in der mineralischen Bindemittelzusammensetzung liegt bevorzugt im Bereich von 0.25 - 0.7, insbesondere 0.26 - 0.65, bevorzugt 0.27 - 0.60, im Speziellen 0.28 - 0.55.

Das Copolymer wird mit Vorteil mit einem Anteil von 0.01 - 10 Gew.-%, insbesondere 0.1 - 7 Gew.-% oder 0.2 - 5 Gew.-%, bezogen auf den Bindemittelgehalt, eingesetzt. Der Anteil des Copolymers bezieht sich dabei auf das Copolymer an sich. Bei einem Copolymer in Form einer Lösung ist entsprechend der Feststoffgehalt massgebend.

Bei der mineralischen Bindemittelzusammensetzung handelt es sich bevorzugt um eine Mörtel- oder Betonzusammensetzung.

Entsprechend sind durch Aushärten von solchen Bindemittelzusammensetzungen nach Zugabe von Wasser Formkörper erhältlich. Diese können prinzipiell beliebig geformt werden und z.B. Bestandteil eines Bauwerks, z.B. eines Gebäudes oder einer Brücke, sein.

Ein zusätzlicher Aspekt der vorliegenden Erfindung betrifft ein Verfahren zur Herstellung einer Bindemittelzusammensetzung. Dabei wird ein mineralisches Bindemittel, welches insbesondere ein latent hydraulisches und/oder puzzolanisches Bindemittel enthält, mit einem Copolymer, wie vorstehend beschrieben, und einem alkalischen oder basischen Aktivierungsmittel, ebenfalls wie vorstehend beschrieben, vermischt.

Gemäss einem bevorzugten Verfahren wird dabei das Anmachwasser für die Bindemittelzusammensetzung mit dem Aktivierungsmittel vorgemischt und anschliessend das Copolymer beigemischt. In einem nachfolgenden Schritt wird dann das Anmachwasser enthaltend das Kammpolymer und gegebenenfalls das Aktivierungsmittel mit dem Bindemittel vermischt. Dies hat sich im Hinblick auf eine möglichst gute Wirksamkeit des Copolymers in der Bindemittelzusammensetzung als vorteilhaft erwiesen.

Es aber prinzipiell auch möglich, zuerst das Aktivierungsmittel mit dem mineralischen Bindemittel zu vermischen, z.B. mit einem Teil des Anmachwassers, und nachträglich das Copolymer beizumischen, beispielsweise mit einem weiteren Teil des Anmachwassers.

Weiter kann es vorteilhaft sein, wenigstens einen Teil des Copolymers, insbesondere sämtliches Copolymers, vor und/oder während einem Mahlprozess des mineralischen Bindemittels, z.B. einem hydraulischen, latent hydraulischen und/oder puzzolanischen Bindemittels, beizumischen.

Unabhängig davon kann es auch bevorzugt sein, wenigstens einen Teil des Aktivierungsmittels, insbesondere sämtliches Aktivierungsmittel, vor und/oder während einem Mahlprozess des mineralischen Bindemittels beizumischen. Gegebenenfalls können sowohl das Kammpolymer als auch das Aktivierungsmittel wenigstens teilweise vor und/oder während dem Mahlprozess zugegeben werden.

Diese Arten der Zugabe können insbesondere die Handhabung beim Anmachen von Bindemittelzusammensetzungen vereinfachen und gegebenenfalls den Mahlprozess positiv beeinflussen.

Aus den nachfolgenden Ausführungsbeispielen ergeben sich weitere vorteilhafte Ausführungsformen der Erfindung.

### Kurze Beschreibung der Zeichnung

Die zur Erläuterung der Ausführungsbeispiele verwendeten Figuren zeigen:
- Fig.1:: Den zeitlichen Verlauf der Monomerenumsätze bei der Herstellung eines erfindungsgemässen Copolymers (**P1**);
- Fig. 2:: Eine schematische Darstellung einer möglichen Struktur eines Copolymers, welche sich aus den Umsätzen gemäss Fig. 1 ableiten lässt.

### Ausführungsbeispiele

### 1. Herstellungsbeispiele für Polymere

### 1.1 Referenzpolymer R1 (Vergleichsbeispiel, statistisches Copolymer)

Zur Herstellung eines Vergleichspolymers werden in einem Reaktionsgefäss werden 1.4 g Natriumhypophosphit und 36 g deionisiertes Wasser vorgelegt. Die Reaktionslösung wird auf 80°C erwärmt. Zu dieser Lösung wird innert 120 min eine Mischung aus 108.3 g 50 %-igem Methoxy-Polyethylenglykol1000-Methacrylat, 8.6 g Methacrylsäure und 20 g Wasser zugetropft. Gleichzeitig wir innert 130 min eine Lösung aus 0.89 g Natriumpersulfat und 20 g Wasser zugetropft. Nach Beendigung wir die Lösung abgekühlt. Zurück bleibt ein leicht gelbliches, leicht viskoses Polymer.

Das so erhaltene Copolymer wird als Referenzpolymer **R1** bezeichnet und weist eine rein statistische bzw. zufällige Verteilung der Monomereinheiten (Methacrylsäureeinheiten und Polyethylenglykol-Methacrylateinheiten) auf.

### 1.2 Copolymer P1

Zur Herstellung des Gradientpolymers mittels RAFT-Polymerisation werden in einem Rundkolben, ausgestattet mit einem Rückflusskühler, Rührwerk, Thermometer und einem Gaseinleitungsrohr 57.4 g 50 %-iges Methoxy-Polyethylenglykol1000-Methacrylat (0.03 mol) und 22 g deionisiertes Wasser vorgelegt. Das Reaktionsgemisch wird unter kräftigem Rühren auf 80°C erwärmt. Ein leichter N2-Inertgasstrom wird während des Aufwärmens und der ganzen restlichen Reaktionsdauer durch die Lösung geführt. Zum Gemisch werden nun 378 mg 4-Cyano-4-(thiobenzoyl)pentansäure (1.35 mmol) gegeben. Nachdem sich die Substanz vollständig gelöst hat, werden 67 mg AIBN (0.41 mmol) zugegeben. Von nun an wird der Umsatz mittels HPLC regelmässig bestimmt.

Sobald die Umsetzung, bezogen auf Methoxy-Polyethylenglykol-Methacrylat, 65 Mol-% beträgt, werden innert 20 min 4.66 g Methacrylsäure (0.05 mol) gelöst in 20 g H₂O zugtropft. Nach Beendigung wird das Gemisch für weitere 4 h reagieren und anschliessend abkühlen gelassen. Zurück bleibt eine klare, leicht rötliche, wässrige Lösung mit einem Feststoffgehalt von rund 35%. Das so erhaltene Copolymer mit Gradientenstruktrur wird als Copolymer **P1** bezeichnet.

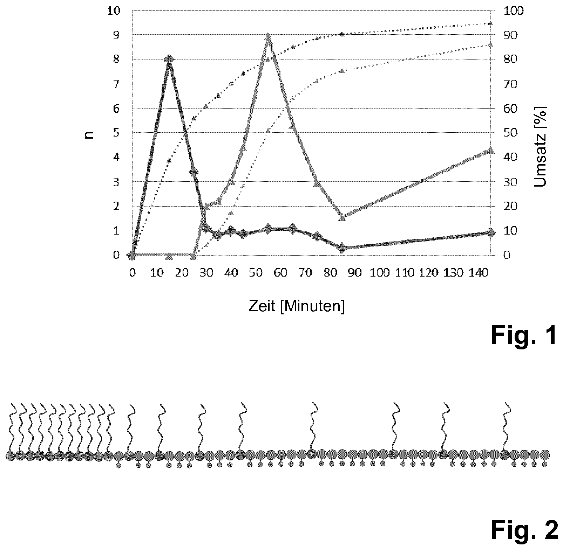

In Fig. 1 ist der zeitliche Verlauf der Monomerenumsätze bei der Herstellung des Copolymers **P1** dargestellt. Die Monomerenumsätze wurden zu den in Fig. 1 angegebenen Zeiten während der Herstellung des Copolymers durch Hochleistungsflüssigkeitschromatographie (HPLC) in an sich bekannter Weise bestimmt. Die obere gepunktete Kurve, welche im Ursprung zum Zeitpinkt t = 0 Minuten beginnt, stellt den prozentualen Umsatz der Methoxy-Polyethylenglykol-Methacrylat-Monomere (= Seitenketten-tragenden Monomere **m2**) dar (Skala rechts). Die untere gepunktete Kurve, welche zum Zeitpunkt t = 25 Minuten beginnt, stellt den prozentualen Umsatz der Methacrylsäure-Monomere (= ionisierbaren Monomere **m1**) dar (Skala rechts). Die ausgezogene Linie mit den rautenförmigen Punkten gibt die Anzahl an Seitenketten-tragenden Monomere **m2** an, welche seit dem vorangehenden Messpunkt polymerisiert wurden (= n(**M2**); linke Skala). Entsprechend stellt die ausgezogene Linie mit den dreieckförmigen Punkten die Anzahl an ionisierbaren Monomeren **m1** dar, welche seit dem vorangehenden Messpunkt polymerisiert wurden (= n(**M1**); linke Skala).

Berechnet man aus den Angaben in Fig. 1 für den Zeitraum von 0 bis 55 Minuten zum jeweiligen Zeitpunkt das Verhältnis n(**M2**)/[n(**M1**) + n(**M2**)] sowie n(**M1**)/[n(**M1**) + n(**M2**)], ergeben sich folgend Werte:

**Tabelle 1: Monomerenverhältnisse während der Herstellung des Copolymers P1.**

| Zeitpunkt | n(**M2**)/[n(**M1**) + n(**M2**)] | n(**M1**)/[n(**M1**) + n(**M2**)] |
|---|---|---|
| 15 | 100% | 0% |
| 25 | 100% | 0% |
| 30 | 33% | 67% |
| 35 | 29% | 71% |
| 40 | 25% | 75% |
| 45 | 17% | 83% |
| 55 | 10% | 90% |

Aus Tabelle 1 ist ersichtlich, dass bei der Herstellung des Copolymers **P1** während den ersten 25 Minuten ein Abschnitt bestehen aus 100% Seitenketten-tragenden Monomereinheiten **M2** gebildet wird und anschliessend ein Abschnitt in welchem der Anteil an Seitenketten-tragenden Monomereinheiten **M2** kontinuierlich abnimmt, während der Anteil an ionisierbaren Monomereinheiten **M1** kontinuierlich zunimmt.

In Fig. 2 ist zudem eine mögliche Struktur des Copolymers **P1** schematisch dargestellt. Diese lässt sich unmittelbar aus den in Fig. 1 genannten Umsätzen herleiten. Die Seitenketten-tragenden Monomereinheiten **M2** (= polymerisierte Methoxy-Polyethylenglykol-Methacrylat-Monomere) sind dabei als Kreis mit gewundenem Fortsatz dargestellt. Die ionisierbaren Monomereinheiten **M1** sind als hantelförmige Symbole dargestellt.

Aus Fig. 2 ist ersichtlich, dass Copolymer **P1** eine ersten Abschnitt **A** mit Gradientenstruktur sowie einen weiteren Abschnitt **B,** bestehend im Wesentlichen aus Seitenketten-tragenden Monomereinheiten, umfasst.

### 1.3 Copolymer P2

Zur Herstellung des Gradientpolymers mittels RAFT-Polymerisation werden in einem Rundkolben, ausgestattet mit einem Rückflusskühler, Rührwerk, Thermometer und einem Gaseinleitungsrohr 57.4 g 50 %-iges Methoxy-Polyethylenglykol1000-Methacrylat (0.03 mol) und 22 g deionisiertes Wasser vorgelegt. Das Reaktionsgemisch wird unter kräftigem Rühren auf 80°C erwärmt. Ein leichter N2-Inertgasstrom wird während des Aufwärmens und der ganzen restlichen Reaktionsdauer durch die Lösung geführt. Zum Gemisch werden nun 378 mg 4-Cyano-4-(thiobenzoyl)pentansäure (1.35 mmol) gegeben. Nachdem sich die Substanz vollständig gelöst hat, werden 67 mg AIBN (0.41 mmol) zugegeben. Von nun an wird der Umsatz mittels HPLC regelmässig bestimmt.

Sobald die Umsetzung, bezogen auf Methoxy-Polyethylenglykol-Methacrylat, 65 Mol-% beträgt, werden innert 10 min 4.66 g Methacrylsäure (0.05 mol) gelöst in 20 g H₂O zugtropft. Nach Beendigung wird das Gemisch für weitere 4 h reagieren und anschliessend abkühlen gelassen. Zurück bleibt eine klare, leicht rötliche, wässrige Lösung mit einem Feststoffgehalt von rund 35%. Das so erhaltene Copolymer mit Gradientenstruktrur wird als Copolymer **P1** bezeichnet.

### 1.3 Copolymer P3

Zur Herstellung des Gradientpolymers mittels RAFT-Polymerisation werden in einem Rundkolben, ausgestattet mit einem Rückflusskühler, Rührwerk, Thermometer und einem Gaseinleitungsrohr 57.4 g 50 %-iges Methoxy-Polyethylenglykol1000-Methacrylat (0.03 mol) und 22 g deionisiertes Wasser vorgelegt. Das Reaktionsgemisch wird unter kräftigem Rühren auf 80°C erwärmt. Ein leichter N2-Inertgasstrom wird während des Aufwärmens und der ganzen restlichen Reaktionsdauer durch die Lösung geführt. Zum Gemisch werden nun 378 mg 4-Cyano-4-(thiobenzoyl)pentansäure (1.35 mmol) gegeben. Nachdem sich die Substanz vollständig gelöst hat, werden 67 mg AIBN (0.41 mmol) zugegeben. Von nun an wird der Umsatz mittels HPLC regelmässig bestimmt.

Sobald die Umsetzung, bezogen auf Methoxy-Polyethylenglykol-Methacrylat, 45 Mol-% beträgt, werden innert 20 min 4.66 g Methacrylsäure (0.05 mol) gelöst in 20 g H₂O zugtropft. Nach Beendigung wird das Gemisch für weitere 4 h reagieren und anschliessend abkühlen gelassen. Zurück bleibt eine klare, leicht rötliche, wässrige Lösung mit einem Feststoffgehalt von rund 35%. Das so erhaltene Copolymer mit Gradientenstruktrur wird als Copolymer **P3** bezeichnet.

### 1.4 Copolymer P4

Zur Herstellung des Gradientpolymers mittels RAFT-Polymerisation werden in einem Rundkolben, ausgestattet mit einem Rückflusskühler, Rührwerk, Thermometer und einem Gaseinleitungsrohr 57.4 g 50 %-iges Methoxy-Polyethylenglykol1000-Methacrylat (0.03 mol) und 22 g deionisiertes Wasser vorgelegt. Das Reaktionsgemisch wird unter kräftigem Rühren auf 80°C erwärmt. Ein leichter N2-Inertgasstrom wird während des Aufwärmens und der ganzen restlichen Reaktionsdauer durch die Lösung geführt. Zum Gemisch werden nun 378 mg 4-Cyano-4-(thiobenzoyl)pentansäure (1.35 mmol) gegeben. Nachdem sich die Substanz vollständig gelöst hat, werden 67 mg AIBN (0.41 mmol) zugegeben. Von nun an wird der Umsatz mittels HPLC regelmässig bestimmt.

Sobald die Umsetzung, bezogen auf Methoxy-Polyethylenglykol-Methacrylat, 30 Mol-% beträgt, werden innert 20 min 4.66 g Methacrylsäure (0.05 mol) gelöst in 20 g H₂O zugtropft. Nach Beendigung wird das Gemisch für weitere 4 h reagieren und anschliessend abkühlen gelassen. Zurück bleibt eine klare, leicht rötliche, wässrige Lösung mit einem Feststoffgehalt von rund 35 %. Das so erhaltene Copolymer mit Gradientenstruktrur wird als Copolymer **P4** bezeichnet.

### 2. Mörtelmischungen

### 2.1 Herstellung

Die zu Testzwecken eingesetzte Mörtelmischung weist die in Tabelle 2 beschriebene Trockenzusammensetzung auf:

**Tabelle 2: Trockenzusammensetzung Mörtelmischung**

| **Komponente** | **Menge [g]** |
|---|---|
| Zement (CEM I 42.5 N; Normo 4; erhältlich bei Holcim Schweiz) | 750 g |
| Kalksteinfüller | 141 g |
| Sand 0-1 mm | 738 g |
| Sand 1-4 mm | 1107 g |
| Sand 4-8 mm | 1154 g |

Zum Anmachen einer Mörtelmischung wurden die Sande, der Kalksteinfüller und der Zement 1 Minute in einem Hobart-Mischer trocken gemischt. Innerhalb von 30 Sekunden wurde das Anmachwasser (Verhältnis Wasser zu Zement w/z = 0.49)beigemischt wurde, zugegeben und noch weitere 2.5 Minuten gemischt. Die Gesamtmischzeit nass dauerte jeweils 3 Minuten.

Dem Anmachwasser wurde vor der Zugabe zur Mörtelmischung vorgängig das jeweilige Polymer (Anteil: 0.24 Gew.-%; bezogen auf Feststoffgehalt des Polymers und bezogen auf Zementgehalt) sowie gegebenenfalls ein basisches Aktivierungsmittel (NaOH; 0.17 Gew.-% bezogen auf Zementgehalt) beigemischt. Sofern sowohl ein Copolymer als auch ein basisches Aktivierungsmittel zugemischt wurden, erfolgte die Zugabe des basischen Aktivierungsmittels zum Anmachwasser vor der Zugabe des Copolymers.

### 2.2 Mörteltests

Zur Bestimmung der Dispergierwirkung der Polymere wurde jeweils das Ausbreitmass (ABM) von angemachten Mörtelmischungen zu verschiedenen Zeiten gemessen. Das Ausbreitmass (ABM) des Mörtels wurde gemäss EN 1015-3 bestimmt.

### 2.3 Resultate der Mörteltests

Tabelle 3 gibt eine Übersicht über die durchgeführten Mörteltests und die dabei erzielten Resultate. Versuch **V1** ist ein zu Vergleichszwecken durchgeführter Nullversuch ohne Zugabe eines Polymers.

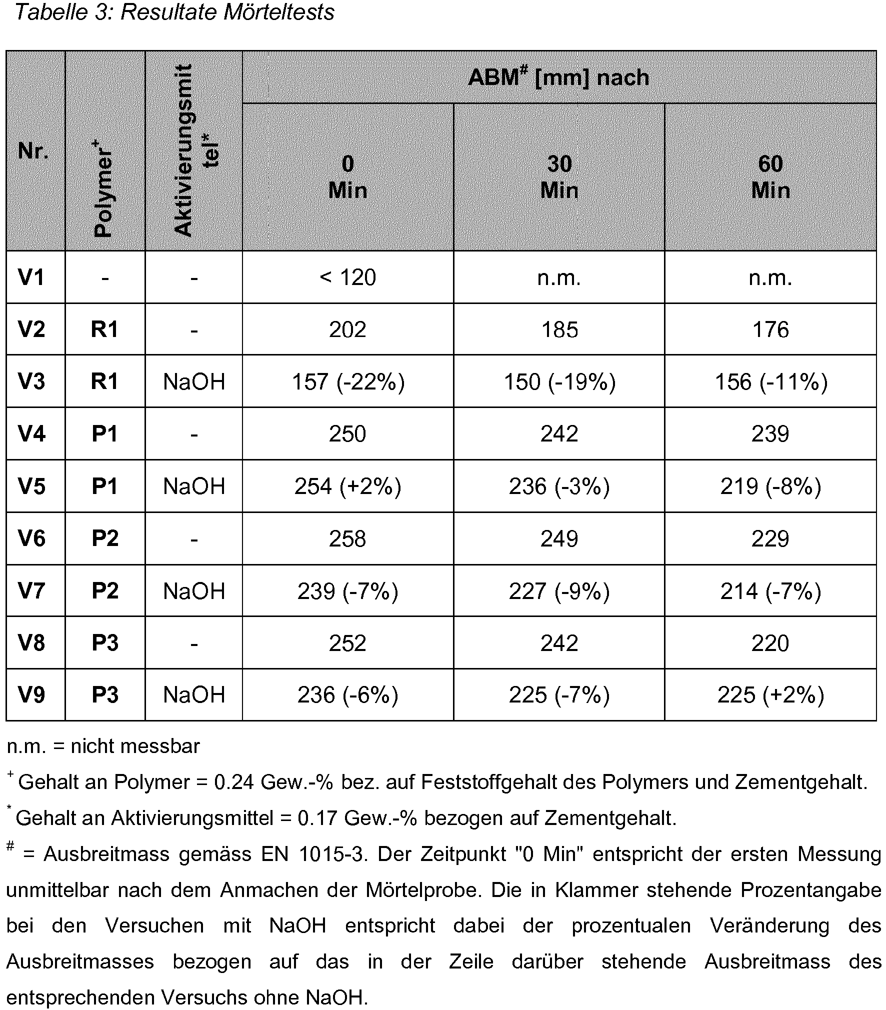

Die Versuche zeigen deutlich, dass bei Verwendung von Copolymeren **P1** - **P3** mit Gradientenstruktur (siehe Versuche **V4** - **V9**) die prozentuale Veränderung des Ausbreitmasses aufgrund der Zugabe von NaOH klar geringer ausfällt als bei Verwendung des Referenzpolymers **R1** (siehe Versuche **V2** und **V3**).

Aus den präsentierten Resultaten lässt sich somit schliessen, dass die erfindungsgemässen Copolymere in verschiedener Hinsicht vorteilhaft gegenüber bekannten Polymeren sind. Insbesondere können mit den erfindungsgemässen Polymeren hohe Dispergier- und Verflüssigungswirkungen erreicht werden, welche sich auch über vergleichsweise lange Zeit auf einem für die Praxis interessanten Niveau aufrechterhalten lassen. Zudem sind die erfindungsgemässen Polymere klar weniger anfällig gegenüber alkalischen Aktivierungsmitteln als herkömmliche Polymere.

Die vorstehend beschriebenen Ausführungsformen sind jedoch lediglich als illustrative Beispiele zu verstehen, welche im Rahmen der Erfindung beliebig abgewandelt werden können.

## Patentansprüche

1. Verwendung eines Copolymers als Dispergiermittel in einer Bindemittelzusammensetzung enthaltend ein alkalisches Aktivierungsmittel, wobei das Aktivierungsmittel insbesondere zur Aktivierung eines latent hydraulischen und/oder puzzolanischen Bindemittels geeignet ist, wobei das Copolymer ein Polymerrückgrat und daran gebundenen Seitenketten aufweist und wenigstens eine ionisierbare Monomereinheit **M1** sowie wenigstens eine Seitenketten-tragende Monomereinheit **M2** umfasst, **dadurch gekennzeichnet, dass** das Copolymer in wenigstens einem Abschnitt **A** in einer Richtung entlang des Polymerrückgrats bezüglich der ionisierbare Monomereinheit **M1** und/oder bezüglich der Seitenketten-tragenden Monomereinheit **M2** eine Gradientenstruktur aufweist, wobei die ionisierbare Monomereinheit **M1** eine Struktur der Formel I aufweist, 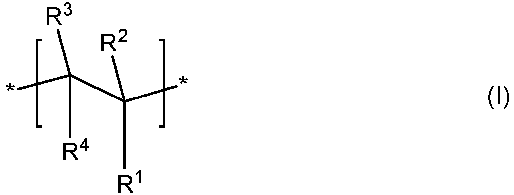 und die Seitenketten-tragende Monomereinheit **M2** eine Struktur der Formel II beinhaltet 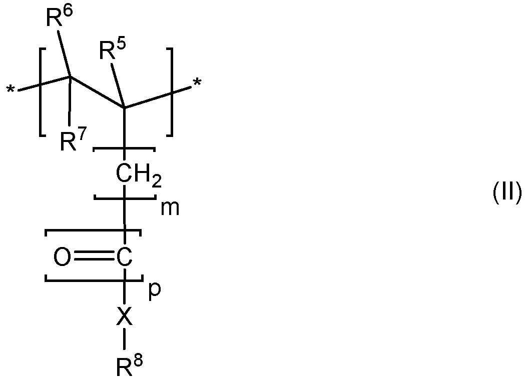 wobei
R¹, jeweils unabhängig voneinander, für -COOM, -SO₂-OM, -O-PO(OM)₂ und/oder -PO(OM)₂ steht,
R², R³, R⁵ und R⁶, jeweils unabhängig voneinander, für H oder eine Alkylgruppe mit 1 bis 5 Kohlenstoffatomen stehen,
R⁴ und R⁷, jeweils unabhängig voneinander, für H, -COOM oder eine Alkylgruppe mit 1 bis 5 Kohlenstoffatomen stehen,
oder wobei R¹ mit R⁴ einen Ring bildet zu -CO-O-CO-,
M, unabhängig voneinander, H⁺, ein Alkalimetallion, ein Erdalkalimetallion, ein zwei oder dreiwertiges Metallion, ein Ammoniumion oder eine organische Ammoniumgruppe darstellt;
m = 0, 1 oder 2 ist,
p = 0 oder 1 ist,
X, jeweils unabhängig voneinander, für -O- oder -NH- steht,
R⁸ für eine Gruppe der Formel -[AO]ₙ-R^{a} steht,
wobei A = C₂- bis C₄-Alkylen, R^{a} für H, eine C₁- bis C₂₀-Alkylgruppe, -Cycloalkyllgruppe oder -Alkylarylgruppe steht,
und n = 2 - 250, insbesondere 10 - 200 ist,
**dadurch gekennzeichnet, dass** das Copolymer zusätzlich zum wenigstens einen Abschnitt **A** einen weiteren Abschnitt **B** mit einer im Wesentlichen konstanten lokalen Konzentration an Monomeren und/oder einer zufälligen Verteilung an Monomeren aufweist, wobei der weitere Abschnitt **B** ionisierbare Monomereinheiten **M1** und/oder Seitenketten-tragenden Monomereinheiten **M2** umfasst, und **dadurch gekennzeichnet, dass** der weitere Abschnitt **B** mit der im Wesentlichen konstanten lokalen Konzentration, bezogen auf sämtliche darin enthaltenen Monomereinheiten, wenigstens 30 Mol-%, insbesondere wenigstens 50 Mol-%, bevorzugt wenigstens 75 Mol-%, im Besonderen wenigstens 90 Mol-% oder wenigstens 95 Mol-%, Seitenketten-tragenden Monomereinheiten **M2** umfasst und wobei ein allenfalls vorhandener Anteil von ionisierbaren Monomereinheiten **M1** im weiteren Abschnitt kleiner gleich 10 Mol-% oder kleiner als 5 Mol.-%, ist, bezogen auf sämtliche Monomereinheiten **M2** im weiteren Abschnitt.

2. Verwendung nach Anspruch 1, **dadurch gekennzeichnet, dass** die Bindemittelzusammensetzung ein latent hydraulisches und/oder puzzolanisches Bindemittel enthält oder daraus besteht.

3. Verwendung nach einem der vorangehenden Ansprüche, **dadurch gekennzeichnet, dass** in dem wenigstens einem Abschnitt A des Copolymers eine lokale Konzentration der wenigstens einen ionisierbaren Monomereinheit **M1** entlang des Polymerrückgrats kontinuierlich zunimmt, während eine lokale Konzentration der wenigstens einen Seitenketten-tragenden Monomereinheit **M2** entlang des Polymerrückgrats kontinuierlich abnimmt, oder umgekehrt.

4. Verwendung nach einem der vorangehenden Ansprüche, **dadurch gekennzeichnet, dass** die Polydispersität des Copolymers < 1.5 ist und insbesondere im Bereich von 1.0 - 1.4, speziell 1.1 - 1.3, liegt.

5. Verwendung nach einem der vorangehenden Ansprüche, **dadurch gekennzeichnet, dass** der wenigstens eine Abschnitt A mit der Gradientenstruktur einen Anteil von mindestens 30%, insbesondere mindestens 50%, bevorzugt mindestens 75% oder 90%, an Monomereinheiten aufweist, bezogen auf eine Gesamtanzahl an Monomereinheiten im Polymerrückgrat.

6. Verwendung nach einem der vorangehenden Ansprüche, **dadurch gekennzeichnet, dass** ein Molverhältnis der Monomereinheiten **M1** zu den Monomereinheiten **M2** im Bereich von 0.5 - 6, insbesondere 0.7 - 4, bevorzugt 0.9 - 3.8, weiter bevorzugt 1.0 - 3.7 oder 2 - 3.5 liegt.

7. Verwendung nach einem der vorangehenden Ansprüche, **dadurch gekennzeichnet, dass** R¹ = COOM ist; R² und R⁵, unabhängig voneinander, für H, -CH₃ oder Mischungen daraus stehen; R³ und R⁶, unabhängig voneinander, für H oder -CH₃, bevorzugt für H, stehen; R⁴ und R⁷, unabhängig voneinander, für H oder -COOM, bevorzugt für H, stehen; und wobei X bei wenigstens 75 Mol-%, insbesondere bei wenigstens 90 Mol-%, speziell bei wenigstens 99 Mol-% aller Monomereinheiten **M2** für -O- steht.

8. Bindemittelzusammensetzung enthaltend ein mineralisches Bindemittel und ein alkalisches Aktivierungsmittel sowie ein wie in einem der vorangehenden Ansprüche definiertes Copolymer, wobei insbesondere zudem ein latent hydraulisches und/oder puzzolanisches Bindemittel enthalten ist.

9. Verfahren zur Herstellung einer Bindemittelzusammensetzung nach Anspruch 8, wobei ein mineralisches Bindemittel, insbesondere enthaltend ein latent hydraulisches und/oder puzzolanisches Bindemittel, mit einem Copolymer wie in einem der Ansprüche 1 - 7 definiert und mit einem alkalischen Aktivierungsmittel vermischt wird.

10. Formkörper, erhältlich durch Aushärten einer Bindemittelzusammensetzung gemäss Anspruch 9 nach Zugabe von Wasser.

## Claims

1. Use of a copolymer as dispersant in a binder composition comprising an alkaline activating agent, the activating agent being especially suitable for activation of a latently hydraulic and/or pozzolanic binder, and the copolymer having a polymer backbone and side chains bonded thereto and comprising at least one ionizable monomer unit M1 and at least one side chain-bearing monomer unit M2, **characterized in that** the copolymer has a gradient structure in at least one section A in a direction along the polymer backbone with regard to the ionizable monomer unit M1 and/or with regard to the side chain-bearing monomer unit M2, where the ionizable monomer unit M1 has a structure of the formula I 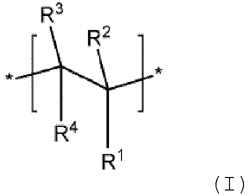 and the side chain-bearing monomer unit M2 includes a structure of the formula II 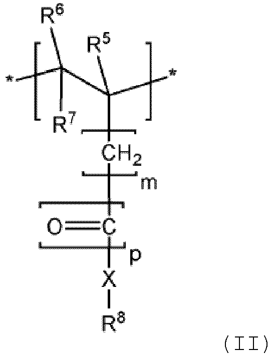 where
R¹, in each case independently, is -COOM, -SO₂-OM, -O-PO(OM)₂ and/or -PO(OM)₂,
R², R³, R⁵ and R⁶, in each case independently, are H or an alkyl group having 1 to 5 carbon atoms,
R⁴ and R⁷, in each case independently, are H, -COOM or an alkyl group having 1 to 5 carbon atoms,
or where R¹ forms a ring together with R⁴ to give -CO-O-CO-,
M, independently of any other, is H⁺, an alkali metal ion, an alkaline earth metal ion, a di- or trivalent metal ion, an ammonium ion or an organic ammonium group; m = 0, 1 or 2,
p = 0 or 1,
X, in each case independently, is -O- or -NH-,
R⁸ is a group of the formula -[AO]ₙ-R^{a}
where A = C₂- to C₄-alkylene, R^{a} is H, a C₁- to C₂₀-alkyl group, -cycloalkyl group or -alkylaryl group,
and n = 2-250, especially 10-200,
**characterized in that** the copolymer, in addition to the at least one section A, has a further section B having an essentially constant local concentration of monomers and/or a random distribution of monomers, where the further section B comprises ionizable monomer units M1 and/or side chain-bearing monomer units M2, and **characterized in that** the further section B having the essentially constant local concentration, based on all the monomer units present therein, comprises at least 30 mol%, especially at least 50 mol%, preferably at least 75 mol%, in particular at least 90 mol% or at least 95 mol%, of side chain-bearing monomer units M2 and wherein any proportion of ionizable monomer units M1 present in the further section is not more than 10 mol% or less than 5 mol%, based on all the monomer units M2 in the further section.

2. Use according to Claim 1, **characterized in that** the binder composition comprises or consists of a latently hydraulic and/or pozzolanic binder.

3. Use according to either of the preceding claims, **characterized in that**, in the at least one section A of the copolymer, a local concentration of the at least one ionizable monomer unit M1 increases continuously along the polymer backbone, while a local concentration of the at least one side chain-bearing monomer unit M2 decreases continuously along the polymer backbone, or vice versa.

4. Use according to any of the preceding claims, **characterized in that** the polydispersity of the copolymer is < 1.5 and is particularly in the range of 1.0-1.4, especially 1.1-1.3.

5. Use according to any of the preceding claims, **characterized in that** the at least one section A having the gradient structure has a proportion of at least 30%, especially at least 50%, preferably at least 75% or 90%, of monomer units, based on a total number of monomer units in the polymer backbone.

6. Use according to any of the preceding claims, **characterized in that** a molar ratio of the monomer units M1 to the monomer units M2 is in the range of 0.5-6, especially 0.7-4, preferably 0.9-3.8, further preferably 1.0-3.7 or 2-3.5.

7. Use according to any of the preceding claims, **characterized in that** R¹ = COOM; R² and R⁵, independently of one another, are H, -CH₃ or mixtures thereof; R³ and R⁶, independently of one another, are H or -CH₃, preferably H; R⁴ and R⁷, independently of one another, are H or -COOM, preferably H; and where X in at least 75 mol%, particularly in at least 90 mol%, especially in at least 99 mol%, of all monomer units M2 is -O-.

8. Binder composition comprising a mineral binder and an alkaline activating agent, and also a copolymer as defined in any of the preceding claims, wherein a latently hydraulic and/or pozzolanic binder is especially additionally present.

9. Process for producing a binder composition according to Claim 8, wherein a mineral binder, especially comprising a latently hydraulic and/or pozzolanic binder, is mixed with a copolymer as defined in any of Claims 1-7 and with an alkaline activating agent.

10. Shaped article produced by curing a binder composition according to Claim 9 after addition of water.

## Revendications

1. Utilisation d'un copolymère en tant que dispersant dans une composition de liant contenant un agent d'activation alcalin, l'agent d'activation étant particulièrement adapté à l'activation d'un liant hydraulique latent et/ou pouzzolanique, le copolymère étant doté d'un squelette de polymère et des chaînes latérales qui y sont liées, et comprenant au moins un motif monomère M1 ionisable ainsi qu'au moins un motif monomère M2 portant des chaînes latérales, **caractérisée en ce que** le copolymère présente dans au moins un segment A dans une direction le long du squelette de polymère, une structure à gradient en ce qui concerne le motif monomère M1 ionisable et/ou en ce qui concerne le motif monomère M2 portant des chaînes latérales, le motif monomère M1 ionisable présentant une structure de formule I, 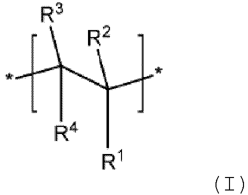 et le motif monomère M2 portant des chaînes latérales contenant une structure de formule II 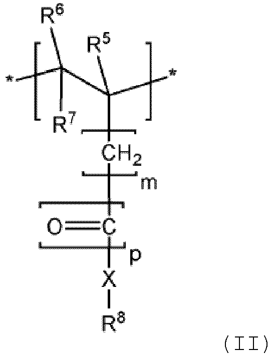 dans lesquelles
R¹ représente, à chaque fois indépendamment les uns des autres, -COOM, -SO₂-OM, -O-PO(OM)₂ et/ou -PO(OM)₂,
R², R³, R⁵ et R⁶ représentent, chaque fois indépendamment les uns des autres, H ou un groupe alkyle comprenant 1 à 5 atomes de carbone,
R⁴ et R⁷ représentent, chaque fois indépendamment l'un de l'autre, H, -COOM ou un groupe alkyle comprenant 1 à 5 atomes de carbone,
ou dans lesquelles R¹ forme avec R⁴ un cycle pour donner -CO-O-CO-,
M est, indépendamment les uns des autres, H⁺, un ion de métal alcalin, un ion de métal alcalino-terreux, un ion métallique divalent ou trivalent, un ion ammonium ou un groupe ammonium organique ;
m = 0, 1 ou 2,
p = 0 ou 1,
X représente, à chaque fois indépendamment les uns des autres, -O- ou -NH-,
R⁸ représente un groupe de formule -[AO]ₙ-R^{a},
dans laquelle A = alkylène en C₂-C₄, R^{a} représente H, un groupe alkyle en C₁-C₂₀, un groupe cycloalkyle ou un groupe alkylaryle,
et n = 2 - 250, en particulier 10 - 200,
**caractérisée en ce que** le copolymère comprend, en plus d'au moins un segment A, un autre segment B présentant une concentration locale sensiblement constante de monomères et/ou une distribution aléatoire de monomères, l'autre segment B comprenant des motifs monomères M1 ionisables et/ou des motifs monomères M2 portant des chaînes latérales, et **caractérisée en ce que** l'autre segment B présentant une concentration locale sensiblement constante, par rapport à l'ensemble des motifs monomères qu'il contient, comprend au moins 30 % en moles, en particulier au moins 50 % en moles, préférablement au moins 75 % en moles, en particulier au moins 90 % en moles ou au moins 95 % en moles de motifs monomères M2 portant des chaînes latérales, et une proportion éventuellement présente de motifs monomères M1 ionisables dans l'autre segment étant inférieure ou égale à 10 % en moles ou inférieure à 5 % en moles, par rapport à l'ensemble des motifs monomères M2 dans l'autre segment.

2. Utilisation selon la revendication 1, **caractérisée en ce que** la composition de liant contient ou est constituée d'un liant hydraulique latent et/ou pouzzolanique.

3. Utilisation selon l'une quelconque des revendications précédentes, **caractérisée en ce que**, dans l'au moins un segment A du copolymère, une concentration locale de l'au moins un motif monomère M1 ionisable augmente en continu le long du squelette de polymère, tandis qu'une concentration locale de l'au moins un motif monomère M2 portant des chaînes latérales diminue en continu le long du squelette de polymère, ou inversement.

4. Utilisation selon l'une quelconque des revendications précédentes, **caractérisée en ce que** la polydispersité du copolymère est < 1,5 et se situe en particulier dans la plage de 1,0 à 1,4, spécifiquement de 1,1 à 1,3.

5. Utilisation selon l'une quelconque des revendications précédentes, **caractérisée en ce que** l'au moins un segment A doté de la structure à gradient présente une proportion d'au moins 30 %, en particulier d'au moins 50 %, préférablement d'au moins 75 % ou 90 %, de motifs monomères, par rapport à un nombre total de motifs monomères dans le squelette de polymère.

6. Utilisation selon l'une quelconque des revendications précédentes, **caractérisée en ce qu'**un rapport molaire des motifs monomères M1 sur les motifs monomères M2 se situe dans la plage de 0,5 à 6, en particulier de 0,7 à 4, préférablement de 0,9 à 3,8, plus préférablement de 1,0 à 3,7 ou de 2 à 3,5.

7. Utilisation selon l'une quelconque des revendications précédentes, **caractérisée en ce que** R¹ = COOM ; R² et R⁵, indépendamment l'un de l'autre, représentent H, -CH₃ ou des mélanges de ceux-ci ; R³ et R⁶, indépendamment l'un de l'autre, représentent H ou - CH₃, préférablement H ; R⁴ et R⁷, indépendamment l'un de l'autre, représentent H ou -COOM, préférablement H ; et X représentant -O- pour au moins 75 % en moles, en particulier pour au moins 90 % en moles, spécifiquement pour au moins 99 % en moles de tous les motifs monomères M2.

8. Composition de liant contenant un liant minéral et un agent d'activation alcalin, ainsi qu'un copolymère tel que défini dans l'une quelconque des revendications précédentes, contenant, en particulier, en plus un liant hydraulique latent et/ou pouzzolanique.

9. Procédé de préparation d'une composition de liant selon la revendication 8, dans lequel un liant minéral, contenant en particulier un liant hydraulique latent et/ou pouzzolanique, est mélangé avec un copolymère tel que défini dans l'une des revendications 1 à 7 et avec un agent d'activation alcalin.

10. Corps moulé, pouvant être obtenu par durcissement d'une composition de liant selon la revendication 9 après ajout d'eau.
